# EUROPEAN PATENT APPLICATION

(11) **EP 4 354 940 A1**
(43) Date of publication of application: **17.04.2024**
(21) Application number: 22819302.5
(22) Date of filing: 13.05.2022
(51) Int. Cl.: H04W 24/04, H04W 24/08

(54) **CLI MEASUREMENT METHOD AND COMMUNICATION APPARATUS**

(30) Priority: 11.06.2021 CN 202110653933
(71) Applicant: Huawei Technologies Co., Ltd., Shenzhen, Guangdong 518129 (CN)
(72) Inventor: LIU, Yunfeng, Shenzhen, Guangdong 518129 (CN); GUO, Zhiheng, Shenzhen, Guangdong 518129 (CN); XIE, Xinqian, Shenzhen, Guangdong 518129 (CN)
(74) Representative: Maiwald GmbH
(86) International application number: PCT/CN2022/092734
(87) International publication number: WO 2022/257704

(57) **Abstract**

This application discloses a CLI measurement method and a communication apparatus. The method includes: A terminal device receives resource configuration information from a network device, where the resource configuration information indicates a resource for performing CLI measurement by the terminal device; and when a specific condition is met, the terminal device cancels CLI measurement on at least one symbol including the resource for performing CLI measurement. In this application, an occasion at which the terminal device cancels CLI measurement is specified, to avoid a communication exception caused when a symbol in which the resource for performing CLI measurement by the terminal device is located conflicts with a symbol in which a resource used for another purpose is located.

## Description

### CROSS-REFERENCE TO RELATED APPLICATIONS

This application claims priority to Chinese Patent Application No. 202110653933.0, filed with the China National Intellectual Property Administration on June 11, 2021 and entitled "CLI MEASUREMENT METHOD AND COMMUNICATION APPARATUS", which is incorporated herein by reference in its entirety.

### TECHNICAL FIELD

This application relates to the field of interference measurement technologies, and in particular, to a cross-link interference (Cross-link Interference, CLI) measurement method and a communication apparatus.

### BACKGROUND

Time division duplex (time division duplex, TDD) is a duplex manner in which uplink transmission and downlink transmission are implemented through time division. In a TDD communication mode, receiving and sending in a communication system are performed in different time periods of a same frequency. When TDD uplink/downlink patterns (TDD UL/DL patterns) of neighboring cells are different, data sent in a cell may cause interference to data received in another cell. This type of interference is referred to as cross-link interference (cross-link interference, CLI).

To reduce or avoid the CLI, a network device configures, for a terminal device, a resource used to perform CLI measurement, so that the terminal device performs CLI measurement. The network device coordinates and schedules, based on a measurement result of the terminal device, the resource used by the terminal device. However, if some or all of resources configured by the network device for the terminal device to perform CLI measurement are indicated to be used for another purpose, the terminal device cannot determine a purpose of the resources configured by the network device to perform CLI measurement. This may cause a communication exception.

### SUMMARY

This application provides a CLI measurement method and a communication apparatus, to specify a condition for performing CLI measurement by a terminal device, and reduce a communication exception as much as possible.

According to a first aspect, a communication method is provided. The method includes:

A terminal device receives resource configuration information from a network device, where the resource configuration information indicates a first resource used by the terminal device to perform CLI measurement; and when a first specific condition is met, the terminal device cancels CLI measurement on at least one symbol, where the at least one symbol includes a symbol in which the first resource is located. This solution specifies the specific condition for canceling CLI measurement by the terminal device, and avoids a communication exception caused when a conflict occurs in CLI measurement resources configured by the terminal device.

In a possible implementation, the at least one symbol includes the symbol in which the first resource is located and NO symbols before the symbol in which the first resource is located, and NO is a positive integer. That is, NO is an integer greater than or equal to 1. Because a distance between terminal devices is usually less than a distance between a terminal device and a network device, for example, a signal from a first terminal device to a second terminal device arrives at the second terminal device earlier than a signal from the network device to the second terminal device. Therefore, the terminal device performs CLI measurement in advance. In other words, symbols actually used by the terminal device to perform CLI measurement are the symbol in which the first resource is located and the NO symbols before the symbol in which the first resource is located. In this solution, when the first specific condition is met, the terminal device cancels CLI measurement on the symbol in which the first resource is located, and also cancels CLI measurement on the NO symbols. This avoids a conflict between resources used to perform CLI measurement as much as possible.

In a possible implementation, the first specific condition includes one or more of the following conditions:
Condition 1: The at least one symbol partially or completely overlaps with a symbol in which a second resource is located, and the symbol in which the second resource is located is an uplink symbol. Because the at least one symbol is used to perform CLI measurement, when the at least one symbol partially or completely overlaps with the uplink symbol in which the second resource is located, that is, when some or all of the at least one symbol used to perform CLI measurement are used for both downlink transmission and uplink transmission, in this case, the terminal device cancels CLI measurement on the at least one symbol. To be specific, when the resource for CLI measurement partially or completely overlaps with the resource used for uplink transmission, to avoid a conflict occurring on the at least one symbol, the terminal device cancels CLI measurement.

In an optional implementation, the symbol in which the second resource is located may be configured as the uplink symbol by using radio resource control (radio resource control, RRC) signaling. Alternatively, the symbol in which the second resource is located may be indicated as the uplink symbol by using a slot format indicator (slot format indicator, SFI).

Condition 2: The at least one symbol partially or completely overlaps with a third resource, and the third resource includes a symbol corresponding to one or more valid physical random access channel (physical random access channel, PRACH) occasions. Alternatively, the third resource includes a symbol corresponding to one or more valid PRACH occasions and at least one of N_{gap} symbols before the symbol corresponding to the one or more valid PRACH occasions, where N_{gap} is an integer greater than or equal to 0.

Because the symbol corresponding to the one or more valid PRACH occasions should be an uplink symbol or a flexible symbol, N_{gap} symbols before the symbol corresponding to the one or more valid PRACH occasions should be uplink symbols or flexible symbols. The terminal device performs CLI measurement on the at least one symbol, and the terminal device considers the at least one symbol as a downlink symbol. Therefore, when the at least one symbol partially or completely overlaps with the third resource, that is, a conflict occurs on the at least one symbol, the terminal device cancels CLI measurement. This avoids affecting signal sending on a valid PRACH occasion.

Condition 3: One or more of the at least one symbol indicated by downlink control information (downlink control information, DCI) are used to send an uplink signal or receive a downlink signal.

When one or more symbols overlap in time domain between the resource used to perform CLI measurement and a resource in which an uplink signal scheduled by using the DCI is located or a resource in which a downlink signal indicated by the DCI is located, the resource used for CLI is preferably used to send the uplink signal scheduled by using the DCI or receive the downlink signal indicated by using the DCI.

In an optional implementation, the first resource is configured by using RRC to perform CLI measurement, the one or more of the at least one symbol indicated by the DCI are used to send an uplink signal, and the terminal device cancels CLI measurement.

In an optional implementation, the first resource is indicated by the DCI to perform CLI measurement, and the one or more of the at least one symbol indicated by the DCI are used to send an uplink signal. The terminal device does not expect this case to occur. When this case occurs, the terminal device cancels CLI measurement.

In an optional implementation, the at least one symbol partially or completely overlaps with a symbol on which a fourth resource is located, and a subcarrier corresponding to the fourth resource partially or completely overlaps with at least one subcarrier, where the at least one subcarrier includes a subcarrier corresponding to the first resource. For example, the first resource is configured by using the RRC to perform CLI measurement, the fourth resource indicated by the DCI is used to receive a downlink signal, and the terminal device cancels CLI measurement. For another example, the at least one symbol indicated by the DCI is used to perform CLI measurement, and the fourth resource indicated by the DCI is used to receive a downlink signal. The terminal device does not expect this case to occur. When this case occurs, the terminal device cancels CLI measurement.

In a possible implementation, the first resource is configured by using RRC to perform CLI measurement, and the one or more of the at least one symbol are configured by using the RRC to send an uplink signal or receive a downlink signal. Alternatively, the at least one symbol is indicated by the DCI to be used to perform CLI measurement, and the one or more of the at least one symbol are configured by using RRC to send an uplink signal or receive a downlink signal. The terminal device does not expect these cases to occur either. When these cases occur, the terminal device cancels CLI measurement.

Condition 4: One or more of the at least one symbol are configured as flexible symbols by using RRC, or a type of the at least one symbol is not configured by using the RRC, the at least one symbol is configured with an SFI, the terminal device fails to detect the SFI, and the terminal device fails to detect that DCI indicates to perform CLI measurement on the first resource. Alternatively, one or more of the at least one symbol are configured as flexible symbols by using RRC, or a type of the at least one symbol is not configured by using the RRC, the terminal device detects that an SFI indicates that the one or more of the at least one symbol are flexible symbols, and the terminal device fails to detect that DCI indicates to perform CLI measurement on the first resource.

In this solution, although the network device configures, for the terminal device, the first resource used to perform CLI measurement, the network device configures the one or more of the at least one symbol as the flexible symbols by using the RRC, or the network device does not clearly configure the at least one symbol as an uplink symbol, a downlink symbol, or a flexible symbol. When the at least one symbol is configured with the SFI and the terminal device fails to detect the SFI, the terminal device may consider that directions of the one or more of the at least one symbol are not configured. When the terminal device detects that the SFI indicates that one or more of the at least one symbol are flexible symbols, the terminal device considers these symbols as reserved symbols. In this case, if there is no DCI for indicating the terminal device to perform CLI measurement on the first resource, the terminal device does not perform CLI measurement on the at least one symbol. This can avoid a conflict between performing CLI measurement on the at least one symbol by the terminal device and sending the uplink signal or receiving the downlink signal by using the at least one symbol.

Condition 5: The terminal device is configured with a plurality of serving cells, the plurality of serving cells include a reference cell and another cell, the another cell is a serving cell other than the reference cell in the serving cells, and a transmission direction of at least one symbol in the reference cell is different from a transmission direction of at least one symbol in the another cell.

In a possible implementation, the first resource is configured by using RRC in the reference cell to perform CLI measurement, and one or more of the at least one symbol indicated by DCI in the another cell are used to send an uplink signal or receive a downlink signal. In this solution, it is assumed that the first resource is used to perform CLI measurement in the reference cell. Because the one or more of the at least one symbol indicated by the DCI in the another cell are used to send an uplink signal or receive a downlink signal, that is, used to perform CLI measurement and used to send an uplink signal or receive a downlink signal, for example, a physical downlink shared channel (physical downlink shared channel, PDSCH), a physical downlink control channel (physical downlink control channel, PDCCH), or a channel state information reference signal (channel state information reference signal, CSI-RS), the terminal device cancels CLI measurement to avoid a conflict occurring on the at least one symbol.

Alternatively, the condition 5 may be as follows: The first resource is configured in the another cell by using RRC to perform CLI measurement, and one or more of the at least one symbol are configured as uplink symbols in the reference cell by using the RRC. If the first resource is used to perform CLI measurement in the reference cell, but the one or more of the at least one symbol are configured as uplink symbols in the another cell, a conflict may still occur. To avoid the conflict occurring on the at least one symbol, the terminal device cancels CLI measurement.

Alternatively, the condition 5 may be as follows: The first resource is configured in the another cell by using RRC to perform CLI measurement, and one or more of the at least one symbol are configured as symbols in the reference cell by using the RRC to send an uplink signal or receive a downlink signal. To avoid the conflict occurring on the at least one symbol, the terminal device cancels CLI measurement.

In an optional implementation, in the condition 4, a frequency band that corresponds to the symbol on which the first resource is located and that is in the reference cell may be the same as or different from a frequency band that corresponds to the symbol on which the first resource is located and that is in the another cell.

In an optional implementation, the first resource is configured in the serving cell by using the RRC to perform CLI measurement, and one or more of the at least one symbol have different transmission directions in the reference cell and the another cell. For example, the at least one symbol is configured as a downlink symbol in the reference cell by using the RRC, and one or more of the at least one symbol are configured as uplink symbols by using the RRC in the another cell. For another example, the at least one symbol is configured as an uplink symbol in the reference cell by using the RRC, and one or more of the at least one symbol are configured as downlink symbols by using the RRC in the another cell. In this implementation, a frequency band of the reference cell is different from a frequency band of another cell. If a symbol has a different direction in the reference cell and another cell, the terminal device may consider the symbol as a flexible symbol, and does not require the terminal device to receive a downlink signal, and does not expect to send an uplink signal on the symbol. Therefore, the one or more of the at least one symbol have different transmission directions in the reference cell and another cell, and the terminal device may cancel CLI measurement.

In an optional implementation, the terminal device meets one or more of the following four features: The terminal device supports a half-duplex mode, and the terminal device is configured with a plurality of serving cells; the terminal device does not support simultaneous sending and receiving in any serving cell; the terminal device has a half-duplex capability of unpaired spectrum carrier aggregation (carrier aggregation, CA); and the terminal device is configured with no SFI in any serving cell. In this solution, some limitations are imposed on the terminal device. For example, the terminal device supports a half-duplex mode, that is, the terminal device cannot perform simultaneous sending and receiving. For another example, if the terminal device is configured with no SFI in any serving cell, it may be considered that a transmission direction of a symbol in the serving cell is configured by using the RRC. That is, the transmission direction of the symbol in the serving cell has been configured. In these cases, when the one or more of the at least one symbol is used to send, for example, an uplink signal, the resource conflict occurs, and the terminal device cancels CLI measurement, to preferably send an uplink signal or receive a downlink signal. If the terminal device does not meet the foregoing features, the resource conflict may not occur, and the terminal device may perform CLI measurement based on a configuration of the network device.

According to a second aspect, another CLI measurement method is provided, where the method includes:
receiving resource configuration information from a network device, where the resource configuration information indicates a first resource used by a terminal device to perform CLI measurement; and when a second specific condition is met, performing CLI measurement on at least one symbol. The at least one symbol includes a symbol in which the first resource is located, or the at least one symbol includes a symbol in which the first resource is located and NO symbols before the symbol in which the first resource is located. Considering that the network device can indicate, by using the DCI, the resource used to perform CLI measurement, but the at least one symbol may also be indicated by using the SFI as a specific type. In this case, a conflict may occur in the resource used to perform CLI measurement. This solution further specifies the specific condition for performing CLI measurement by the terminal device, avoids a conflict occurring on the at least one symbol, and avoids a communication exception of the terminal device as much as possible.

In a possible implementation, the second specific condition includes but is not limited to one or more of the following conditions:
Condition 1: The first resource is configured by using RRC to perform CLI measurement, and the at least one symbol is configured as a downlink symbol by using the RRC. In this case, even if the terminal device performs CLI measurement on the at least one symbol, a conflict on the at least one symbol is not caused.
Condition 2: The first resource is configured by using RRC to perform CLI measurement, one or more of the at least one symbol are configured as flexible symbols by using the RRC, a symbol other than the flexible symbol in the at least one symbol is configured as a downlink symbol by using the RRC, the terminal device is configured with no SFI, and the terminal device fails to detect that DCI indicates to send an uplink signal or receive a downlink signal on the one or more of the at least one symbol. In this condition, the one or more of the at least one symbol are the flexible symbols, and the symbol other than the flexible symbol in the at least one symbol is the downlink symbol. If the terminal device is configured with no SFI, a direction of the at least one symbol is not changed by the SFI. Further, if the terminal device fails to detect that the DCI indicates to send the uplink signal or receive the downlink signal on the one or more of the at least one symbol, the at least one symbol is not an uplink symbol. Therefore, the terminal device may consider that the at least one symbol is a downlink symbol. In this case, the terminal device can perform CLI measurement on the at least one symbol, a conflict on the at least one symbol is not caused.
Condition 3: The first resource is configured by using RRC to perform CLI measurement, a type of the at least one symbol is not configured by using the RRC, the terminal device is configured with no SFI, and the terminal device fails to detect that DCI indicates to send an uplink signal or receive a downlink signal on one or more of the at least one symbol. Because the at least one symbol is not clearly defined as a type of symbol, the at least one symbol can be used as a downlink symbol, or can be used as an uplink symbol. If the terminal device is configured with no SFI, a direction of the at least one symbol is not changed by the SFI. Further, if the terminal device fails to detect that the DCI indicates to send the uplink signal or receive the downlink signal on the one or more of the at least one symbol, the at least one symbol is not an uplink symbol, and the one or more of the at least one symbol do not overlap with the downlink signal. Therefore, the terminal device may consider that the at least one symbol is a downlink symbol. In this case, the terminal device can perform CLI measurement on the at least one symbol, a conflict on the at least one symbol is not caused.
Condition 4: The first resource is configured by using RRC to perform CLI measurement, one or more of the at least one symbol are configured as flexible symbols by using the RRC, a symbol other than the flexible symbol in the at least one symbol is configured as a downlink symbol by using the RRC, and the terminal device detects that an SFI indicates that the flexible symbol in the at least one symbol is a downlink symbol. Alternatively, the first resource is configured by using RRC to perform CLI measurement, a type of the at least one symbol is not configured by using the RRC, and the terminal device detects that an SFI indicates that the at least one symbol is a downlink symbol. In other words, the first resource is configured by using the RRC to perform CLI measurement, the symbol other than the flexible symbol configured by using the RRC in the at least one symbol is configured as the downlink symbol by using the RRC, and the terminal device detects that the SFI indicates that the flexible symbol in the at least one symbol is the downlink symbol. Alternatively, the first resource is configured by using RRC to perform CLI measurement, a type of the at least one symbol is not configured by using the RRC, and the terminal device detects that an SFI indicates that the flexible symbol in the at least one symbol is a downlink symbol. Similar to the condition 2 or the condition 3, that is, if the one or more of the at least one symbol are flexible symbols, and the symbol in which the first resource is located is not clearly defined as a type of symbol, the symbol in which the first resource is located may be used as a downlink symbol, or may be used as an uplink symbol. However, if the SFI indicates that the at least one symbol is a downlink symbol, the terminal device specifies that the at least one symbol is the downlink symbol. In this case, the terminal device can perform CLI measurement on the at least one symbol, a conflict on the at least one symbol is not caused.
Condition 5: The at least one symbol is configured as a downlink symbol by using RRC, and the terminal device detects that DCI indicates to perform CLI measurement on the first resource. In this condition, if the at least one symbol is configured as the downlink symbol by using RRC, the terminal device specifies that the at least one symbol is the downlink symbol. In this case, the terminal device can perform CLI measurement on the at least one symbol, a conflict on the at least one symbol is not caused.
Condition 6: One or more of the at least one symbol are configured as flexible symbols by using RRC, a symbol other than the flexible symbol in the at least one symbol is configured as a downlink symbol by using the RRC, and the terminal device detects that DCI indicates to perform CLI measurement on the first resource and that the at least one symbol is configured with no SFI. Alternatively, a type of the at least one symbol is not configured by using RRC, and the terminal device detects that DCI indicates to perform CLI measurement on the first resource and that the at least one symbol is configured with no SFI. In this condition, the one or more of the at least one symbol are flexible symbols, or the type of the at least one symbol is not configured. The flexible symbol or the symbol whose type is not configured may be used to receive a downlink signal, or may be used to send an uplink signal. If the terminal device is configured with no SFI, a direction of the at least one symbol is not changed by the SFI. Further, the DCI indicates the terminal device to perform CLI measurement, and the terminal device may consider that the at least one symbol is a downlink symbol. In this case, the terminal device can perform CLI measurement on the at least one symbol, a conflict on the at least one symbol is not caused.
Condition 7: One or more of the at least one symbol are configured as flexible symbols by using RRC, a symbol other than the flexible symbol in the at least one symbol is configured as a downlink symbol by using the RRC, the terminal device detects that DCI indicates to perform CLI measurement on the first resource, the at least one symbol is configured with an SFI, the terminal device fails to detect the SFI, and the terminal device detects that the SFI indicates that the at least one symbol is a flexible symbol or a downlink symbol. Alternatively, no type of the at least one symbol is configured by using RRC, the terminal device detects that DCI indicates to perform CLI measurement on the first resource, the at least one symbol is configured with an SFI, and the terminal device fails to detect the SFI, or the terminal device detects that the SFI indicates that the at least one symbol is a flexible symbol or a downlink symbol. Compared with the condition 6, if the at least one symbol is configured with the SFI, but the terminal device fails to detect the SFI, the DCI indicates the terminal device to perform CLI measurement, and the terminal device may consider that the at least one symbol is a downlink symbol. Alternatively, the terminal device detects that the SFI indicates that the at least one symbol is a flexible symbol or a downlink symbol, and perform CLI measurement based on the SFI indication and the DCI indication, and the terminal device may consider that the at least one symbol is a downlink symbol. The terminal device can perform CLI measurement on the at least one symbol, a conflict on the at least one symbol is not caused.

According to a third aspect, a communication apparatus is provided. The communication apparatus has a function of implementing behavior in the method example in the first aspect. For beneficial effect, refer to the descriptions of the first aspect. Details are not described herein again. The function may be implemented by hardware, or may be implemented by hardware executing corresponding software. The hardware or the software includes one or more modules corresponding to the foregoing function. In a possible design, the communication apparatus includes a processing module and/or a transceiver module. These modules may perform corresponding functions in the method example in the first aspect.

In a possible implementation, the transceiver module is configured to receive resource configuration information from a network device, where the resource configuration information indicates a first resource, and the first resource is used by the communication apparatus to perform CLI measurement. The processing module is configured to: when a first specific condition is met, cancel CLI measurement on at least one symbol, where the at least one symbol includes a symbol in which the first resource is located.

According to a fourth aspect, a communication apparatus is provided. The communication apparatus has a function of implementing behavior in the method example in the second aspect. For beneficial effect, refer to the description of the second aspect. Details are not described herein again. The function may be implemented by hardware, or may be implemented by hardware executing corresponding software. The hardware or the software includes one or more modules corresponding to the foregoing function. In a possible design, the communication apparatus includes a processing module and/or a transceiver module. These modules may perform corresponding functions in the method example in the second aspect.

In a possible implementation, the transceiver module is configured to receive resource configuration information from a network device, where the resource configuration information indicates a first resource, and the first resource is used by a terminal device to perform CLI measurement. The processing module is configured to: when a second specific condition is met, perform CLI measurement on at least one symbol, where the at least one symbol includes a symbol in which the first resource is located, or the at least one symbol includes a symbol in which the first resource is located and NO symbols before the symbol in which the first resource is located.

According to a fifth aspect, a communication apparatus is provided. The communication apparatus may be the terminal device in the foregoing method embodiments or a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiment.

According to a sixth aspect, a computer program product is provided. The computer program product includes computer program code. When the computer program code is run, the method performed by the terminal device in the foregoing aspects is performed.

According to a seventh aspect, this application provides a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete device.

According to an eighth aspect, this application provides a computer-readable storage medium. The computer-readable storage medium stores a computer program. When the computer program is run, the methods performed by the terminal device in the foregoing aspects are implemented.

According to a ninth aspect, this application provides a communication system. The communication system includes the terminal device and the network device according to any one of the first aspect or the possible implementations of the first aspect; or the communication system includes the terminal device and the network device according to any one of the second aspect or the possible implementations of the second aspect; or the communication system includes the terminal device according to any one of the first aspect or the possible implementations of the first aspect, and the terminal device and the network device according to any one of the second aspect or the possible implementations of the second aspect.

### BRIEF DESCRIPTION OF DRAWINGS

FIG. 1 is a schematic diagram of a network architecture to which an embodiment of this application is applicable;
FIG. 2 is a schematic flowchart of a CLI measurement method according to an embodiment of this application;
FIG. 3 is a schematic diagram of a resource conflict according to an embodiment of this application;
FIG. 4 is another schematic flowchart of a CLI measurement method according to an embodiment of this application;
FIG. 5 is a schematic diagram of a structure of a communication apparatus according to an embodiment of this application;
FIG. 6 is a schematic diagram of a structure of a communication apparatus according to an embodiment of this application;
FIG. 7 is a schematic diagram of a structure of a communication apparatus according to an embodiment of this application; and
FIG. 8 is a schematic diagram of a structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The technical solutions provided in embodiments of this application are applied to a fifth generation (a fifth generation, 5G) mobile communication system, for example, a new radio (new radio NR) system, or are applied to a long term evolution (long term evolution, LTE) system, or are applied to a next generation mobile communication system or another similar communication system. This is not specifically limited.

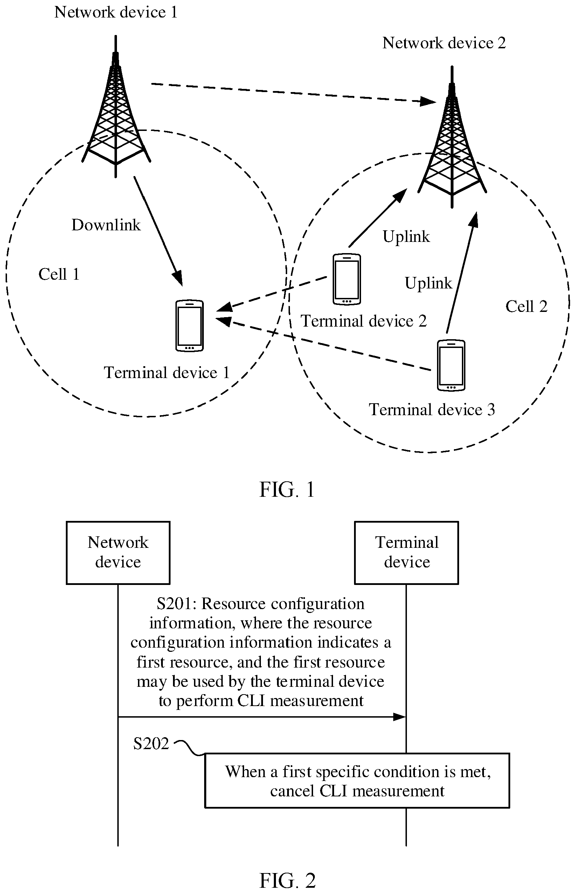

FIG. 1 is an example diagram of an architecture of a communication system to which an embodiment of this application is applicable. The communication system may include at least one network device and at least one terminal device. For example, in FIG. 1, the at least one network device is two network devices, and the two network devices are a network device 1 and a network device 2. A coverage area of each network device may include at least one terminal device. For example, the network device 1 covers a terminal device 1, and the network device 2 covers a terminal device 2 and a terminal device 3. It should be noted that FIG. 1 is only an example. Quantities of network devices and terminal devices included in the communication system are not limited in embodiments of this application. In some embodiments, the communication system may further include another network device, for example, a wireless relay device or a wireless backhaul device.

The network device is an access device used by the terminal device to access the mobile communication system in a wireless manner. For example, the network device includes an access network (access network, AN) device, or a base station (for example, an access point). The network device may also be a device that communicates with the terminal over an air interface, for example, the network device is another possible terminal apparatus. The network device may include an evolved base station (NodeB, eNB, or e-NodeB, evolved NodeB) in a long term evolution (long term evolution, LTE) system or a long term evolution-advanced (long term evolution-advanced, LTE-A) system; or may include a next generation NodeB (next generation NodeB, gNB) in a 5G NR system; or may include an access node in a wireless fidelity (wireless-fidelity, Wi-Fi) system; or the network device may be a relay station, a vehicle-mounted device, or a future evolved public land mobile network (Public Land Mobile Network, PLMN) device. A device in a device-to-device (device-to-device, D2D) network, a device in a machine-to-machine (machine-to-machine, M2M) network, a device in an internet of things (internet of things, IoT) network, a network device in another network PLMN network, or the like. A specific technology and a specific device form that are used by the network device are not limited in embodiments of this application. For example, the network device 1 or the network device 2 in FIG. 1 may be a base station, and correspond to different devices in different systems. For example, the network device 1 or the network device 2 in FIG. 1 may correspond to an eNB in a fourth generation mobile communication technology (a fourth generation, 4G) system, and correspond to a gNB in a 5G system. In embodiments of this application, the network device may include a central unit (central unit, CU) and a distributed unit (distributed unit, DU), and a plurality of DUs may be centrally controlled by one CU. The CU and the DU may be divided based on a protocol layer function of a wireless network that the CU and the DU have. For example, functions of a packet data convergence protocol (packet data convergence protocol, PDCP) layer and a protocol layer above the PDCP layer are set in the CU, and functions of a protocol layer below the PDCP layer, such as a radio link control (radio link control, RLC) layer and a medium access control (medium access control, MAC) layer, are set in the DU. It should be noted that such protocol layer division is only an example, and there may be division of another protocol layer. A radio frequency apparatus may not be disposed in the DU but is disposed remotely from the DU, or may be integrated into the DU, or a part of the radio frequency apparatus is disposed remotely from the DU and a remaining part is integrated into the DU. This is not limited in embodiments of this application. In addition, in some embodiments, a control plane (control plane, CP) and a user plane (user plane, UP) of a CU may alternatively be separated into different entities for implementation, and the different entities are separately a control plane CU entity (CU-CP entity) and a user plane CU entity (CU-UP entity). In the network architecture, signaling generated by the CU may be sent to UE via a DU, or signaling generated by the UE may be sent to the CU via the DU. The DU may transparently transmit the signaling to the UE or the CU by directly encapsulating the signaling at a protocol layer without parsing the signaling. In the network architecture, the CU is classified as a network device on a RAN side. In addition, the CU may be classified as a network device on a CN side. This is not limited in this application.

A terminal device may be referred to as a terminal for short, or referred to as user equipment (user equipment, UE). The terminal device is a device having a wireless transceiver function, and may send a signal to a network device, or receive a signal from a network device. The terminal device may be a mobile phone, a tablet computer, a computer having a wireless transceiver function, a virtual-reality terminal device, an augmented-reality terminal device, a wireless terminal device in industrial control, a wireless terminal device in self-driving, a wireless terminal device in telemedicine, a wireless terminal device in a smart grid, a wireless terminal device in transportation safety, a wireless terminal device in a smart city, or a wireless terminal device in a smart home. The terminal device may be fixed or mobile. This is not limited in embodiments of this application.

For example, the terminal device in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a smart speaker in an IoT network, or the like. By way of example and not limitation, in embodiments of this application, the terminal device may be alternatively a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In addition, in embodiments of this application, the terminal device may be an apparatus configured to implement a function of the terminal, or may be an apparatus, for example, a chip system, that can support the terminal device in implementing the function. The apparatus may be installed in the terminal device. For example, the terminal device may also be a vehicle detector or a sensor in a gas station.

The foregoing describes a network architecture to which embodiments of this application are applicable, and the following describes technical features related to embodiments of this application.

As services are diversified, a same network device may have different service requirements in different time periods. FIG. 1 is used as an example. The network device 1 has a large service data volume in a morning time period, and a small service data volume in an afternoon time period. Compared with that in the afternoon time period, the network device 1 may configure more resources for the terminal device 1 in the morning time period. Different network devices have different service requirements in a same time period or different time periods. FIG. 1 is used as an example. In a same time period, the network device 1 sends data to the terminal device 1, and the network device 2 receives data from the terminal device 2 and/or the terminal device 3. To improve spectrum utilization, the network device 1 and the network device 2 may use a same spectrum resource. For example, for a resource, the network device 1 may configure the resource as a downlink resource, and the network device 2 may configure the resource as an uplink resource. It should be noted that uplink and downlink are relative. In embodiments of this application, transmission from the network device to the terminal device is referred to as downlink, and transmission from the terminal device to the network device is referred to as downlink. In addition, a resource may also be understood as a time-frequency resource, and may include a time domain resource, and may further include a frequency resource.

However, sharing a same resource by different network devices may cause CLI. For example, a slot m is used as an example. The network device 1 may configure the slot m as a downlink slot, and the network device 2 may configure the slot m as an uplink slot. In other words, the network device 1 sends a downlink signal to the terminal device 1 in the slot m, and the terminal device 2 and the terminal device 3 send uplink signals to the network device 2 in the slot m. However, the network device 2 may further receive the downlink signal from the network device 1 in addition to receiving the uplink signals from the terminal device 2 and the terminal device 3 in the slot m. That is, for the network device 2, the downlink signal sent by the network device 1 causes interference to the uplink signals of the terminal device 2 and the terminal device 2. Because the network device 1 causes interference to the network device 2, the interference may also be referred to as interference between a network device and a network device (referred to as interference between network devices in this specification). Similarly, the terminal device 1 may further receive the uplink signals/uplink signal from the terminal device 2 and/or the terminal device 3 in addition to receiving the downlink signal from the network device 1 in the slot m. In other words, for the terminal device 1, the uplink signals/the uplink signal sent by the terminal device 2 and/or the terminal device 3 causes/cause interference to the downlink signal from the network device 1. Because the terminal device 2 and/or the terminal device 3 cause/causes interference to the terminal device 1, the interference may also be referred to as interference between a terminal device and a terminal device (referred to as interference between terminal devices in this specification). In this application, interference between different network devices and interference between different terminal devices are referred to as CLI.

In embodiments of this application, CLI measurement for interference between terminal devices is mainly used as an example. Therefore, measurement of interference between network devices is not described below. To avoid or reduce CLI, the network device configures, for the terminal device, a resource used to perform CLI measurement, and the terminal device performs CLI measurement on the resource that is configured by the network device and that is used to perform CLI measurement. After performing CLI measurement, the terminal device may send an obtained CLI measurement result to the network device, and the network device performs coordination and scheduling, based on the CLI measurement result. This avoids or reduces impact of the CLI on performance such as network throughput.

Based on different CLI measurement indicators, CLI measurement can be classified into the following two types:

### 1. Channel sounding reference signal (sounding reference signal, SRS)-reference signal received power (Reference Signal Receive Power, RSRP) measurement

In this type of CLI measurement, a reference signal is an SRS resource. The terminal device measures SRS resources sent by one or more terminal devices that cause interference, to obtain an RSRP result of each SRS resource. In other words, the terminal device may separately measure and obtain interference strength of each interference source. FIG. 1 is used as an example. The network device 2 may configure one or more SRS resources for each of the terminal device 2 and the terminal device 3. The terminal device 2 and the terminal device 3 send SRSs to the network device 2 on the configured SRS resources. The network device 1 may configure, for the terminal device 1, an SRS resource used to receive SRSs sent by the terminal device 2 and the terminal device 3. In other words, on the SRS resource, the terminal device 1 does not receive the downlink signal from the network device 1, but receives the SRSs sent by the terminal device 2 and the terminal device 3. The SRSs may be used by the terminal device 1 corresponding to the network device 1 to perform CLI measurement between different terminal devices. It should be noted that the network device 2 may configure different SRS resources for the terminal device 2 and the terminal device 3. In this way, each terminal device may learn of CLI of each terminal device through measurement. For example, the network device 2 configures an SRS resource 1 for the terminal device 2, and configures an SRS resource 2 for the terminal device 3. The terminal device 2 sends an SRS on the SRS resource 1, and the terminal device 3 sends an SRS on the SRS resource 2. The terminal device 1 performs RSRP measurement for the SRS received on the SRS resource 1, to obtain an RSRP measurement result, to determine CLI between the terminal device 2 and the terminal device 1. The terminal device 1 performs RSRP measurement for the SRS received on the SRS resource 2, to obtain an RSRP measurement result, to determine CLI between the terminal device 3 and the terminal device 1.

### 2. CLI-received signal strength indicator (received signal strength indicator, RSSI) measurement, namely, measuring the RSSI of CLI

In this type of CLI measurement, the terminal device measures a total received power value on a configured resource for CLI-RSSI measurement. The network device determines, by using the total received power value obtained through measurement of the terminal device, an overall interference status of the terminal device. FIG. 1 is used as an example. The network device 1 may configure, for the terminal device 1, a resource used for RSSI measurement of CLI caused by the terminal device 2 and the terminal device 3. The terminal device 1 may measure an RSSI of CLI on the resource. Because the network device 2 does not specify signals of the terminal device 2 and the terminal device 3 on the resource, the terminal device 1 cannot obtain RSSIs of CLI between terminal devices caused by different terminal devices corresponding to the network device 2, that is, cannot distinguish RSSIs of CLI between the terminal device 2 and the terminal device 1 and RSSIs of CLI between the terminal device 3 and the terminal device 1.

For both SRS-RSRP measurement and CLI-RSSI measurement, the network device configures, for the terminal device, a resource used to perform CLI measurement. For ease of description, in the following, the resource used for perform CLI measurement is collectively referred to as a CLI measurement resource. FIG. 1 is still used. The network device 1 may configure the CLI measurement resource for the terminal device 1 by using higher layer signaling, for example, radio resource control (radio resource control, RRC) signaling or downlink control information (downlink control information, DCI). Because a distance between terminal devices is usually longer than a distance between a terminal device and a terminal device, time at which a signal sent by a terminal device arrives at another terminal device is shorter than time at which the signal arrives at the network device. Therefore, as defined in the protocol, start time of performing CLI measurement by the terminal device needs to be at least NO symbols earlier than downlink reference time. A value of NO is related to a frequency range (Frequency Range, FR) and a subcarrier spacing (Subcarrier Spacing, SCS) of a CLI measurement resource, as shown in Table 1 below.

**Table 1**

| SCS (Δf) | FR 1 (Frequency range 1) | FR 2 (Frequency range 2) |
|---|---|---|
| 15/30 kHz | 1 | - (The SCS is not included in the frequency band.) |
| 60 kHz | 2 | 1 |
| 120 kHz | - (The SCS is not included in the frequency band.) | 2 |

The network device may configure a CLI measurement resource for the terminal device by using higher layer signaling or DCI, or may configure a slot format for a group of terminal devices. For example, the network device may configure a slot format for a group of terminal devices by using higher layer signaling, for example, a TDD configuration (configure) and/or a slot format indicator (slot format indicator, SFI). The TDD configuration and the slot format may be used to configure a format of a symbol in a slot. For example, one symbol may be classified into three types: uplink, downlink, and flexible. In other words, a symbol may be an uplink symbol, a downlink symbol, or a flexible symbol.

However, in a possible scenario, some or all of the CLI measurement resources configured by the network device for the terminal device by using higher layer signaling are further indicated for another purpose, and a conflict may occur in the resources used to perform CLI measurement. It is assumed that the network device configures, for the terminal device by using RRC, a resource used to perform CLI measurement as a group of symbols in one slot. If the network device further indicates, by using the DCI, that the group of symbols is used by the terminal device to send the uplink signal. In other words, if the group of symbols are used to perform CLI measurement and send an uplink signal, it is considered that a conflict occurs in the group of symbols. Alternatively, when the network device indicates, by using the SFI, that the group of symbols in the slot is an uplink symbol, it is also considered that a conflict occurs in the group of symbols. In a possible scenario, a resource purpose indicated by the network device by using the DCI may also conflict with a slot format indicated by the network device by using the SFI. For example, the DCI indicates the terminal device to perform CLI measurement on a group of symbols in a slot, and it may be considered that the group of symbols in the slot is downlink symbols. When the group of symbols that is in the slot and that is indicated by the SFI is uplink symbols, it is also considered that a conflict is also in the group of symbols. When a conflict occurs in the CLI measurement resource configured by the network device for the terminal device, the terminal device still performs CLI measurement on the CLI measurement resource. This affects signal receiving or signal sending of the terminal device.

In view of this, some embodiments of this application provide a CLI measurement method. In the method, a terminal device performs CLI measurement or cancels CLI measurement only when a specific condition is met. That is, a trigger condition for the terminal device to perform CLI measurement or cancel CLI measurement is specified. Because the terminal device cancels CLI measurement when a CLI resource conflict occurs, impact on sending a signal or receiving a signal by the terminal device can be avoided.

The following describes in detail the technical solutions provided in embodiments of this application with reference to the accompanying drawings.

FIG. 2 shows a procedure of a CLI measurement method according to an embodiment of this application. In the following description process, an example in which the method is applied to the network architecture shown in FIG. 1 is used. In addition, the method may be performed by two communication apparatuses. The two communication apparatuses are, for example, a first communication apparatus and a second communication apparatus. The first communication apparatus may be a network device or a communication apparatus that can support the network device in implementing a function required in the method. Alternatively, the first communication apparatus may be a terminal device or a communication apparatus that can support the terminal device in implementing a function required in the method. Certainly, the first communication apparatus may alternatively be another communication apparatus, for example, a chip system. Similarly, the second communication apparatus may be a network device or a communication apparatus that can support the network device in implementing a function required in the method. Alternatively, the second communication apparatus may be a terminal device or a communication apparatus that can support the terminal device in implementing a function required in the method. Certainly, the second communication apparatus may alternatively be another communication apparatus, for example, a chip system. In addition, implementations of the first communication apparatus and the second communication apparatus are not limited. For example, the first communication apparatus may be a network device, and the second communication apparatus is a terminal device. Alternatively, both the first communication apparatus and the second communication apparatus are network devices. Alternatively, both the first communication apparatus and the second communication apparatus are terminal devices. Alternatively, the first communication apparatus is a network device, and the second communication apparatus is a communication apparatus that can support the terminal device in implementing a function required in the method. The network device is, for example, a base station.

For ease of description, in the following, an example in which the method is performed by a network device and a terminal device is used. In other words, an example in which the first communication apparatus is a network device and the second communication apparatus is a terminal device is used. If this embodiment is applied to the network architecture shown in FIG. 1, the network device described below may be the network device in the network architecture shown in FIG. 1, and the terminal device described below may be any terminal device in FIG. 1.

In the following, an uplink signal used to send by the terminal may be a signal sent by the terminal device to the network device, or may be a signal sent by the terminal device to another terminal device. The uplink signal may include a PUSCH, a PUCCH, an SRS, or a PRACH. A downlink signal received by the terminal device is not a signal sent by another terminal device to the terminal device. For example, the downlink signal may be a signal sent by the network device to the terminal device. The downlink signal may be a PDSCH, a PDCCH, or a CSI-RS.

A valid resource is a resource that can be used by a communication device to send a signal or receive a signal. For example, for the terminal device, a valid PRACH occasion means that a resource corresponding to the PRACH occasion can be used by the terminal device to send the PRACH.

That two resources partially overlap or completely overlap may be considered that an intersection exists between the two resources in time domain and/or frequency domain. For example, that the two resources partially overlap or completely overlap in time domain may be considered that an intersection exists between the two resources in time domain, and that the two resources partially overlap or completely overlap in frequency domain may be considered that an intersection exists between the two resources in frequency domain. If two resources have different purposes, it can be considered that a conflict exists between overlapping resources in the two resources. In other words, a conflict in two resources may be considered that the two resources overlap or have an intersection, and the two resources have different purposes. A time domain resource is used as an example. There are a resource A and a resource B, a symbol in which the resource A is located is used for downlink transmission, a symbol in which the resource B is located is used for uplink transmission, and some or all symbols in the symbol in which the resource A is located overlap with some or all symbols in the symbol in which the resource B is located. In this case, the resource A overlaps with the resource B.

In embodiments of this application, that a symbol is indicated as a flexible type (symbol)/an uplink type (symbol)/a downlink type (symbol) by an SFI means that the network device configures an SFI for the terminal device, and the terminal device successfully detects that the SFI indicates that the symbol is a flexible type (symbol)/an uplink type (symbol)/a downlink type (symbol).

In embodiments of this application, canceling CLI measurement may be understood as that the terminal device does not expect to perform CLI measurement, or may be considered as that the terminal device does not expect to receive a signal used to perform CLI measurement. In some other embodiments, canceling CLI measurement may be understood as that the terminal device does not receive a signal used to perform CLI measurement. The following uses an example in which a signal used to perform CLI measurement is an SRS.

Failing to detect the SFI means that SFI signaling is configured. However, for a receiving end, failing to detect the SFI may be that a transmitting end does not send the SFI, or may be that the transmitting end sends the SFI but the receiving end does not decode or successfully decodes the SFI.

In embodiments of this application, uplink and downlink are relative. For example, for the network device and the terminal device, transmission from the network device to the terminal device may be referred to as downlink, and transmission from the terminal device to the network device may be referred to as uplink (which is used as an example in this specification). For example, for a first terminal device and a second terminal device, transmission from the first terminal device to the second terminal device may be referred to as downlink, and transmission from the second terminal device to the first terminal device may be referred to as uplink.

S201: The network device sends resource configuration information to the terminal device, and correspondingly, the terminal device receives the resource configuration information, where the resource configuration information indicates a first resource, and the first resource may be used by the terminal device to perform CLI measurement.

To reduce or avoid CLI, the network device configures, for the terminal device, a resource used to perform CLI measurement, so that the terminal device performs CLI measurement; and coordinates and schedules, based on a result of CLI measurement by the network device, a resource used by the terminal device. For example, the network device indicates, by using the resource configuration information, the first resource (also referred to as a CLI measurement resource in the text) used by the terminal device to perform CLI measurement. After receiving the resource configuration information, the terminal device performs CLI measurement on the first resource. Because a signal that is used to perform CLI measurement and that is received by the terminal device usually arrives before a start symbol of the first resource, the terminal device usually starts to perform CLI measurement on NO symbols before the start symbol of the first resource. For ease of description, "a time domain resource used to perform CLI measurement" is referred to as at least one symbol below. The at least one symbol may include a symbol in which the first resource is located, or may include the symbol in which the first resource is located and NO symbols before the symbol in which the first resource is located.

S202: The terminal device determines that a first specific condition is met, and cancels CLI measurement.

The network device may configure a type of a symbol by using signaling. For example, the network device may flexibly indicate, by using the DCI, that some resources are used to send an uplink signal or receive a downlink symbol. For another example, the network device may indicate the type of the symbol by using the SFI. Therefore, when the network device configures the first resource for the terminal device to perform CLI measurement, the network device may also change, by using signaling, transmission directions or types of one or more symbols in which the first resource is located. For example, the network device configures the first resource for CLI measurement, and the network device indicates, by using the DCI, that the one or more symbols in which the first resource is located are used to send an uplink signal or receive a downlink signal. In this case, a conflict occurs in the first resource. If the terminal device performs CLI measurement on the first resource, obviously, sending an uplink signal or receiving a downlink signal by the terminal device is affected. A conflict in the first resource is not expected to occur by the terminal device. It may also be considered that the terminal device does not expect to send an uplink signal or receive a downlink signal on a time domain resource used to perform CLI measurement. Therefore, when determining that a conflict occurs in the first resource or the time domain resource used to perform CLI measurement, the terminal device cancels CLI measurement.

First, several cases in which a conflict occurs in a time domain resource used to perform CLI measurement are described. It should be understood that, that a conflict occurs in a time domain resource used to perform CLI measurement means that one or more of the at least one symbol is further used to send an uplink signal or receive a downlink signal.

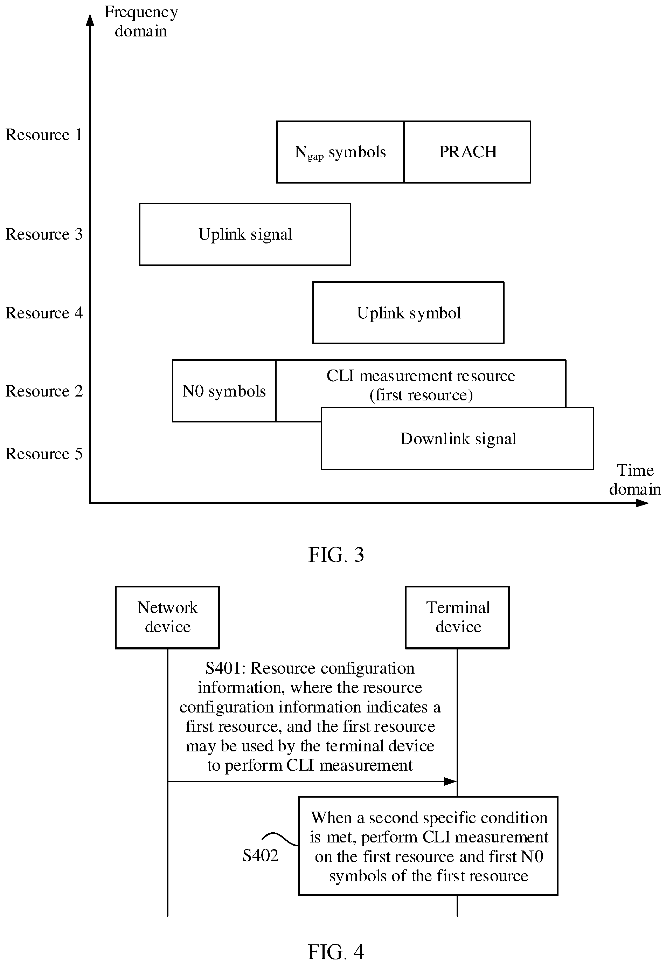

FIG. 3 shows several cases in which a conflict occurs in a time domain resource used to perform CLI measurement.

As shown in FIG. 3, a resource 1 is a symbol corresponding to a valid PRACH occasion and N_{gap} symbols before the symbol corresponding to the valid PRACH occasion. A resource 2 is a symbol in which the first resource is located and NO symbols before the symbol in which the first resource is located. A resource 3 is a symbol in which a resource that is configured by a network device and that is used to send an uplink signal is located. A resource 4 is configured as an uplink symbol by using RRC signaling, or is indicated as an uplink symbol by using an SFI. A resource 5 is a resource that is configured by a network and that is used to receive a downlink signal. A symbol in the resource 1 cannot be a downlink symbol. When the resource 1 partially or completely overlaps with the resource 2, and CLI measurement is performed on the resource 2, it may be considered that an overlapping symbol is a downlink symbol, and obviously a conflict exists. When the resource 2 partially or completely overlaps with the resource 3, it may be considered that an overlapping symbol is used to perform CLI measurement and send an uplink signal, and obviously a conflict exists. When the resource 2 partially or completely overlaps with the resource 4, it may be considered that an overlapping symbol is used to perform CLI measurement and is also an uplink symbol, and obviously a conflict exists. When symbols in which the resource 2 and the resource 5 are located partially or completely overlap, and a subcarrier corresponding to the first resource partially or completely overlaps a subcarrier corresponding to the resource 5, it may be considered that an overlapping time-frequency resource is used to perform CLI measurement, and is also used to receive another downlink signal, and obviously a conflict exists.

For example, when the terminal device does not support cli-SRS-RSRP-FDM_DL, that is, the terminal device does not support receiving, in an FDM manner, a signal used to perform CLI measurement and another signal, the terminal device does not expect to receive a PDCCH, a PDSCH, or a CSI-RS signal on a symbol on which SRS-RSRP measurement is performed and NO symbols before the symbol. For another example, when the terminal device does not support cli-RSSI-FDM-DL, the terminal device does not expect to receive a PDCCH, a PDSCH, or a CSI-RS signal on a symbol on which CLI-RSSI measurement is performed and NO symbols before the symbol.

For still another example, when the terminal device supports cli-SRS-RSRP-FDM _DL, that is, the terminal device supports frequency division multiplexing of a CLI measurement resource and another signal, the terminal device does not expect that when a PDCCH, a PDSCH, or a CSI-RS signal is received on a symbol on which SRS-RSRP measurement is performed and NO symbols before the symbol, a frequency domain resource on which SRS-RSRP measurement is performed partially or completely overlaps with a frequency domain resource used to receive a downlink signal. For yet another example, when the terminal device supports cli-RSSI-FDM-DL, the terminal device does not expect that when a PDCCH, a PDSCH, or a CSI-RS signal is received on a symbol on which CLI-RSSI measurement is performed and NO symbols before the symbol, a frequency domain resource used to perform CLI-RSSI measurement partially or completely overlaps with a frequency domain resource used to receive a downlink signal.

Therefore, if a case that the terminal device does not expect occurs, the terminal device may cancel CLI measurement, and preferably send an uplink signal or receive a downlink signal. For ease of description, in this specification, a condition for canceling CLI measurement by the terminal device is referred to as a first specific condition.

The first specific condition may include one or more of the following conditions. The following separately describes the several specific conditions. It should be noted that, in the following, at least one symbol may include a symbol in which a first resource is located, or may include the symbol in which the first resource is located and NO symbols before the symbol in which the first resource is located.

Condition 1: The at least one symbol partially or completely overlaps with a symbol in which a second resource is located, and the symbol in which the second resource is located is an uplink symbol.

The at least one symbol used to perform CLI measurement should be a downlink symbol or a flexible symbol or used for downlink transmission. If the at least one symbol partially or completely overlaps with the uplink symbol, it may be considered that some or all of the at least one symbol are further used for uplink transmission, and obviously, a conflict exists in the at least one symbol. In this case, the terminal device may cancel CLI measurement on the at least one symbol, that is, the at least one symbol is preferably used for uplink transmission, so that impact of CLI measurement on sending the uplink signal can be avoided.

For example, the symbol in which the second resource is located is configured as the uplink symbol by using RRC signaling. The terminal device determines, based on the RRC signaling sent by the network device, that the symbol in which the second resource is located is the uplink symbol. When the at least one symbol partially or completely overlaps with the symbol in which the second resource is located, the terminal device cancels CLI measurement on the at least one symbol.

For another example, the first resource is configured by using RRC to perform CLI measurement, and the symbol in which the second resource is located is indicated as the uplink symbol by using an SFI. The terminal device determines, based on the SFI sent by the network device, that the symbol in which the second resource is located is the uplink symbol, and the terminal device determines, based on the RRC and the SFI, that the at least one symbol partially or completely overlaps with the symbol in which the second resource is located, the terminal device cancels CLI measurement on the at least one symbol.

For another example, when the DCI indicates that the first resource is used to perform CLI measurement, the SFI indicates that the symbol in which the second resource is located is an uplink symbol, and the at least one symbol partially or completely overlaps the symbol in which the second resource is located, the terminal device does not expect the DCI to indicate that the first resource is used to perform CLI measurement, and the SFI indicates that the symbol in which the second resource is located is the uplink symbol. Therefore, when the at least one symbol partially or completely overlaps with the symbol in which the second resource is located, the terminal device cancels CLI measurement.

Condition 2: The at least one symbol partially or completely overlaps with a third resource, and the third resource includes a symbol corresponding to one or more valid PRACH occasions. Alternatively, the at least one symbol partially or completely overlaps with a third resource, and the third resource includes a symbol corresponding to one or more valid PRACH occasions and at least one of N_{gap} symbols before the symbol corresponding to the one or more valid PRACH occasions, where N_{gap} is an integer greater than or equal to 0. It should be understood that a symbol corresponding to the PRACH occasion cannot be a downlink symbol, and the at least one of N_{gap} symbols before the symbol corresponding to one or more valid PRACH occasions cannot be the downlink symbol. When the terminal device performs CLI measurement on the at least one symbol, the terminal device may consider that the at least one symbol is the downlink symbol. When the at least one symbol partially or completely overlaps with the third resource, obviously a conflict exists. The terminal device cancels CLI measurement on the at least one symbol. This avoids affecting signal sending on a valid PRACH occasion.

Optionally, N_{gap} is related to an SCS of a random access preamble (preamble). For example, if the SCS of the preamble is 1.25 kHz or 5 kHz, the N_{gap} is 0. For example, if the SCS of the preamble is 15 kHz, 30 kHz, 60 kHz, or 120 kHz, the N_{gap} is 2. It should be understood that a relationship between a value of the SCS of the preamble and a value of the N_{gap} is only an example.

Condition 3: One or more of the at least one symbol indicated by DCI are used to send an uplink signal or receive a downlink signal. The network device may flexibly indicate, by using the DCI, that some resources are used to send an uplink signal or receive a downlink symbol. Even if the network device configures, for the terminal device, a resource used to perform CLI measurement, it is inevitable that the resource is reused. For example, the network device indicates, by using the DCI, to reuse the one or more of the at least one symbol to send an uplink signal or receive a downlink signal. In this case, a conflict exists on the one or more of the at least one symbol, and the terminal device also cancels CLI measurement on the at least one symbol, that is, the at least one symbol is preferably used to send an uplink signal or receive a downlink signal.

For example, the first resource is configured by using RRC to perform CLI measurement, the one or more of the at least one symbol indicated by the DCI are used to send an uplink signal, and the terminal device cancels CLI measurement.

For another example, the at least one symbol indicated by the DCI is used to perform CLI measurement, and the one or more of the at least one symbol indicated by the DCI are used to send an uplink signal. The terminal device does not expect this case to occur. When this case occurs, the terminal device cancels CLI measurement.

For still another example, the at least one symbol partially or completely overlaps with a symbol on which a fourth resource is located, and a subcarrier corresponding to the fourth resource partially or completely overlaps with at least one subcarrier, where the at least one subcarrier includes a subcarrier corresponding to the first resource. For example, the first resource is configured by using RRC to perform CLI measurement, the fourth resource indicated by the DCI is used to receive a downlink signal, and the terminal device cancels CLI measurement. For yet another example, the at least one symbol indicated by the DCI is used to perform CLI measurement, and the fourth resource indicated by the DCI is used to receive a downlink signal. The terminal device does not expect this case to occur. When this case occurs, the terminal device cancels CLI measurement.

In a possible implementation, the first resource is configured by using RRC to perform CLI measurement, and the terminal device does not expect that the one or more of the at least one symbol are configured by using the RRC to send an uplink signal or receive a downlink signal. Therefore, the at least one symbol is configured by using the RRC to perform CLI measurement, the one or more of the at least one symbol are configured by using the RRC to send an uplink signal or receive a downlink signal, and the terminal device cancels CLI measurement.

Condition 4: One or more of the at least one symbol are configured as flexible symbols by using RRC, or a type of the at least one symbol is not configured by using the RRC, the at least one symbol is configured with an SFI, the terminal device fails to detect the SFI, and the terminal device fails to detect that DCI indicates to perform CLI measurement on the first resource. Alternatively, one or more of the at least one symbol are configured as flexible symbols by using RRC, or a type of the at least one symbol is not configured by using the RRC, the terminal device detects that an SFI indicates that the one or more of the at least one symbol are flexible symbols, and the terminal device fails to detect that DCI indicates to perform CLI measurement on the first resource.

The network device configures, for the terminal device, the first resource used to perform CLI measurement, but the network device may not configure a symbol in the first resource as an uplink symbol or a downlink symbol. For example, the network device does not configure a type of the symbol in the first resource, or the network device configures the symbol in the first resource as a flexible symbol. In this case, when the at least one symbol is configured with the SFI and the terminal device fails to detect the SFI, the terminal device may consider that directions of the one or more of the at least one symbol are not configured. Alternatively, when the terminal device detects that the SFI indicates that the one or more of the at least one symbol are flexible symbols, the terminal device considers the one or more of the at least one symbol as reserved symbols, and the terminal device does not use the reserved symbols. In an optional manner, for the reserved symbol, because the terminal device cannot determine a purpose of the reserved symbol, the network device may trigger, by using the DCI, the terminal device to determine whether to perform CLI measurement on the first resource. If no DCI indicates the terminal device to perform CLI measurement on the first resource, and the terminal device does not perform CLI measurement on the at least one symbol. If the terminal receives the DCI to indicate the terminal device to perform CLI measurement on the first resource, the terminal device performs CLI measurement on the at least one symbol.

Condition 5: The terminal device is configured with a plurality of serving cells, the plurality of serving cells include a reference cell and another cell, and the another cell is a serving cell other than the reference cell in the serving cells. A transmission direction of the at least one symbol in the reference cell is different from a transmission direction of the at least one symbol in the another cell.

In an example, the condition 5 includes: The first resource is configured by using RRC in the reference cell to perform CLI measurement, and one or more of the at least one symbol indicated by DCI in the another cell are used to send an uplink signal or receive a downlink symbol. Assuming that the first resource is used to perform CLI measurement in the reference cell, the terminal device does not expect the first resource to be used to send an uplink signal or receive a downlink signal in the another cell, for example, a PDSCH, a PDCCH, or a CSI-RS. The DCI indicates that some or all symbols in the symbols in which the first resource is located are used to send an uplink signal or receive a downlink signal in the another cell, that is, one or more symbols in the symbols in which the first resource is located are used to perform CLI measurement and send an uplink signal or receive a downlink signal. To avoid a conflict in the first resource, the terminal device cancels CLI measurement.

In another example, the condition 5 includes: The first resource is configured in the another cell by using RRC to perform CLI measurement, and one or more of the at least one symbol are configured as uplink symbols in the reference cell by using the RRC. If the first resource is used to perform CLI measurement in the another cell, but is configured as an uplink symbol in the reference cell, a conflict may also occur on the first resource. To avoid a conflict in the first resource, the terminal device cancels CLI measurement.

In still another example, the condition 5 includes: The first resource is configured in the another cell by using RRC to perform CLI measurement, and one or more of the at least one symbol are configured in the reference cell by using the RRC to send an uplink signal or receive a downlink symbol. Similarly, if the first resource is used to perform CLI measurement in the another cell, but is configured to send an uplink signal or receive a downlink symbol in the reference cell, a conflict may also occur on the first resource. In this case, the terminal device does not require to perform CLI measurement on the at least one symbol. To avoid a conflict in the first resource, the terminal device cancels CLI measurement.

It should be noted that each of the foregoing three conditions 5 may be considered as a first specific condition. The terminal device determines that, provided that any one of the foregoing three conditions 5 is met, the terminal device does not perform CLI measurement on the first resource, or the terminal device does not perform CLI measurement on the first resource and NO symbols before the symbol in which the first resource is located.

In some embodiments, frequency bands corresponding to the reference cell and the another cell may be the same or may be different. This is not limited in this embodiment of this application. If frequency bands corresponding to the reference cell and the another cell may be the same, a signal used to perform CLI measurement is allowed to be received on one symbol in an FDM manner, and a downlink signal is received, and a conflict may occur in a frequency domain resource used to perform CLI measurement. For example, if a subcarrier corresponding to the first resource partially or completely overlaps with a subcarrier corresponding to a fourth resource, and a symbol in which the fourth resource is located partially or completely overlaps with at least one symbol, it may be considered that a conflict exists between the first resource and the fourth resource. In this case, the terminal device also cancels CLI measurement. In other words, the first specific condition may also include: If frequency bands corresponding to the reference cell and the another cell may be the same, the subcarrier corresponding to the first resource partially or completely overlaps with the subcarrier corresponding to the fourth resource, and the symbol in which the fourth resource is located partially or completely overlaps with the at least one symbol.

Condition 6: The first resource is configured in the serving cell by using the RRC to perform CLI measurement, and one or more of the at least one symbol have different transmission directions in the reference cell and the another cell. For example, one or more of the at least one symbol are configured as downlink symbols in the reference cell by using the RRC, and one or more of the at least one symbol are configured as uplink symbols by using the RRC in the another cell. For another example, one or more of the at least one symbol are configured as uplink symbols by using the RRC in the reference cell, and one or more of the at least one symbol are configured as downlink symbols by using the RRC in the another cell. In this case, the terminal device considers that the one or more of the at least one symbol are flexible. When the RRC configures the terminal device to perform CLI measurement on the symbol in which the first resource is located, the terminal device does not require to perform CLI measurement on the at least one symbol. It should be understood that the first resource is configured in the serving cell to perform CLI measurement. Regardless of whether the symbol in which the first resource is located is configured as an uplink symbol or a downlink symbol in the reference cell and the another cell, provided that the symbol in which the first resource is located is in different transmission directions in the reference cell and the another cell, the terminal device considers that the symbol in which the first resource is located is flexible, and the terminal device does not require to perform CLI measurement. In this case, the terminal device does not perform CLI measurement on the first resource, or does not perform CLI measurement on the first resource and NO symbols before the symbol in which the first resource is located.

In the condition 6, frequency bands corresponding to the reference cell and the another cell may be different.

In a possible implementation, before determining whether to perform CLI measurement, in addition to determining whether the first specific condition is met, the terminal device may further determine whether the terminal device meets a specific feature. For example, when the terminal device meets one or more of the following four features, the terminal device may cancel CLI measurement.

For example, the terminal device needs to meet the following requirements: The terminal device supports a half-duplex mode, and the terminal device is configured with a plurality of serving cells; the terminal device does not support simultaneous sending and receiving in any serving cell; the terminal device has a half-duplex capability of unpaired spectrum CA; and the terminal device is configured with no SFI in any serving cell. For example, the terminal device supports a half-duplex mode, that is, the terminal device cannot perform simultaneous sending and receiving. In these cases, when the first resource used to perform CLI measurement is used to send an uplink signal or receive a downlink signal, a resource conflict occurs, and the terminal device needs to determine whether to perform CLI measurement. This avoids affecting sending the uplink signal or receiving the downlink signal as much as possible.

It should be noted that any one of the condition 1 to the condition 6 belongs to the first specific condition, and any combination of a plurality of conditions of the condition 1 to the condition 6 also belongs to the first specific condition. In addition, any one of the condition 1 to the condition 6 can also be considered as the first specific condition with reference to a feature that the terminal device needs to meet.

In this embodiment of this application, a trigger condition for canceling CLI measurement by the terminal device is specified, for example, any one of the foregoing first specific conditions. For example, when the first resource conflicts with another resource, the terminal device cancels CLI measurement. For another example, when the SFI indicates a conflict with the first resource, the terminal device also cancels CLI measurement. Because the terminal device cancels CLI measurement when a conflict occurs in the first resource, impact on sending a signal or receiving a signal by the terminal device on the first resource can be avoided.

Considering that the network device can indicate, by using the DCI, the resource used to perform CLI measurement, but a specific type of the resource used to perform CLI measurement may also be indicated by the SFI. In this case, a conflict may occur in the resource used to perform CLI measurement. The following provides another CLI measurement method. The method further specifies the specific condition for performing CLI measurement by a terminal device, avoids a conflict in a symbol in which a first resource is located, and avoids a communication exception of the terminal device as much as possible.

FIG. 4 shows another procedure of a CLI measurement method according to an embodiment of this application. The following uses an example in which the method is applied to the network architecture shown in FIG. 1. A difference between procedures shown in FIG. 4 and

FIG. 2 lies in that a specific condition for performing CLI measurement by a terminal device is specified. For details about a repetition in FIG. 2, refer to the description in the embodiment in FIG. 2. Details are not described herein again.

S401: A network device sends resource configuration information to the terminal device, and correspondingly, the terminal device receives the resource configuration information, where the resource configuration information indicates a first resource, and the first resource may be used by the terminal device to perform CLI measurement.

A specific implementation of S401 is the same as that of S201. For details, refer to the description of related content of S201. Details are not described herein again.

S402: The terminal device determines that a second specific condition is met, and performs CLI measurement on a symbol in which the first resource is located and NO symbols before the symbol in which the first resource is located.

A direction of a symbol may be configured to be uplink, downlink, or flexible by using RRC. A flexible symbol configured by using the RRC may be indicated as an uplink symbol or a downlink symbol. For example, a symbol configured as a flexible symbol by using RRC may be configured through semi-persistent measurement to clearly indicate that the symbol is used to send an uplink signal or used to receive a downlink signal. The semi-persistent measurement configuration may include, for example, CLI measurement, CSI-RS measurement, or SRS measurement configured by using the RRC. For example, a symbol is configured as a flexible symbol by using RRC. In addition, if the symbol is configured by using the RRC to perform CLI measurement, the terminal device may consider that the symbol is a downlink symbol, that is, a transmission direction of the symbol is downlink. The flexible symbol configured by using the RRC may also be indicated by an SFI as an uplink symbol or a downlink symbol. Alternatively, the flexible symbol configured by using the RRC may be indicated by DCI to send a signal or receive a signal. For example, a flexible symbol is indicated by DCI to be used to perform CLI measurement, or used to receive a downlink signal, or used to send an uplink signal. If a flexible symbol configured by using the RRC is indicated by DCI to be used to send a signal, the terminal device may consider the symbol as an uplink symbol. Similarly, if a flexible symbol configured by using the RRC is indicated by DCI to be used to receive a signal, the terminal device may consider the symbol as a downlink symbol. In this case, a symbol conflict may occur. For example, a resource purpose indicated by the network device by using the DCI may also conflict with a slot format indicated by the network device by using the SFI. For example, the DCI indicates the terminal device to perform CLI measurement on a group of symbols in one slot. However, the group of symbols that is in the slot and that is indicated by the SFI is uplink symbols. Apparently, a conflict is also in the group of symbols. Once a symbol conflict occurs, the basic rules for mutual coverage in different configurations need to be confirmed. For example, the basic rule may include: An uplink symbol and a downlink symbol configured by using the RRC cannot be modified; or a flexible symbol configured by using the RRC may be configured through semi-persistent measurement, and an SFI and DCI indicate a signal sending or receiving change; and an uplink configuration and a downlink configuration in the semi-persistent measurement configuration may be indicated by using the SFI, and the DCI indicates a signal sending or receiving change. Once a direction of a symbol direction is changed, behavior related to semi-persistent measurement is canceled. The DCI indicates that a direction of sending a signal or receiving a signal cannot conflict with the uplink and downlink indicated by the SFI, but the flexible part in the SFI configuration may be modified.

The terminal device may determine, under these basic rule, behavior related to CLI measurement. That is, a specific condition for performing CLI measurement by the terminal device is further specified. This avoids conflict in the first resource, and avoids a communication exception of the terminal device as much as possible. For example, in this embodiment of this application, a behavior of performing CLI measurement by the terminal device under the DCI indication and the SFI indication is agreed on. That is, the terminal device performs CLI measurement only when a specific condition or some specific conditions are met. For ease of description, in this specification, a condition for performing CLI measurement by the terminal device is referred to as the second specific condition. The second specific condition may include one or more of the following conditions. The following separately describes the several specific conditions.

Condition 1: The first resource is configured by using RRC to perform CLI measurement, and the at least one symbol is configured as a downlink symbol by using the RRC. If the first resource is configured by using the RRC to be used to perform CLI measurement, a symbol in which the first resource is located should be the downlink symbol. When the at least one symbol is configured as the downlink symbol by using the RRC, even if the terminal device can perform CLI measurement on the at least one symbol, a conflict on the at least one symbol is not caused.

Condition 2: The first resource is configured by using RRC to perform CLI measurement, one or more of the at least one symbol are configured as flexible symbols by using the RRC, a symbol other than the flexible symbol in the at least one symbol is configured as a downlink symbol, the terminal device is configured with no SFI, and the terminal fails to detect that DCI indicates to send an uplink signal or receive a downlink signal on the one or more of the at least one symbol. If the one or more of the at least one symbol are the flexible symbols, and the symbol other than the flexible symbol in the at least one symbol is the downlink symbol. If the terminal device is configured with no SFI, a direction of the at least one symbol is not changed by the SFI. Further, if the terminal device fails to detect that the DCI indicates to send the uplink signal or receive the downlink signal on the one or more of the at least one symbol, the at least one symbol is not an uplink symbol. Therefore, the terminal device may consider that the at least one symbol is a downlink symbol. In this case, the terminal device can perform CLI measurement on the at least one symbol, a conflict on the at least one symbol is not caused.

Condition 3: The first resource is configured by using RRC to perform CLI measurement, a type of the at least one symbol is not configured by using the RRC, the terminal device is configured with no SFI, and the terminal device fails to detect that DCI indicates to send an uplink signal or receive a downlink signal on one or more of the at least one symbol. Because the at least one symbol is not clearly defined as a type of symbol, the at least one symbol can be used as a downlink symbol, or can be used as an uplink symbol. If the terminal device is configured with no SFI, a direction of the at least one symbol is not changed by the SFI. Further, if the terminal device fails to detect that the DCI indicates to send the uplink signal or receive the downlink signal on the one or more of the at least one symbol, the at least one symbol is not an uplink symbol, and the one or more of the at least one symbol do not overlap with the downlink signal. Therefore, the terminal device may consider that the at least one symbol is a downlink symbol. In this case, the terminal device can perform CLI measurement on the at least one symbol, a conflict on the at least one symbol is not caused.

Condition 4: The first resource is configured by using RRC to perform CLI measurement, one or more of the at least one symbol are configured as flexible symbols by using the RRC, a symbol other than the flexible symbol in the at least one symbol is configured as a downlink symbol by using the RRC, and the terminal device detects that an SFI indicates that the flexible symbol in the at least one symbol is a downlink symbol. Alternatively, the first resource is configured by using RRC to perform CLI measurement, a type of the at least one symbol is not configured by using the RRC, and the terminal device detects that an SFI indicates that the at least one symbol is a downlink symbol.

Similar to the condition 2 or the condition 3, if the symbol in which the first resource is located is not clearly defined as a type of symbol, the symbol in which the first resource is located may be used as a downlink symbol, or may be used as an uplink symbol. The at least one symbol includes a flexible symbol and a downlink symbol. Further, if the SFI indicates that the at least one symbol is a downlink symbol, the terminal device specifies that the at least one symbol is the downlink symbol. In this case, the terminal device can perform CLI measurement on the at least one symbol, a conflict on the at least one symbol is not caused.

Condition 5: The at least one symbol is configured as a downlink symbol by using RRC, and the terminal device detects that DCI indicates to perform CLI measurement on the first resource. If the at least one symbol is configured as the downlink symbol by using RRC, the terminal device specifies that the at least one symbol is the downlink symbol. In this case, the terminal device can perform CLI measurement on the at least one symbol, a conflict on the at least one symbol is not caused.

Condition 6: One or more of the at least one symbol are configured as flexible symbols by using RRC, a symbol other than the flexible symbol in the at least one symbol is configured as a downlink symbol by using the RRC, and the terminal device detects that DCI indicates to perform CLI measurement on the first resource and that the at least one symbol is configured with no SFI. Alternatively, a type of the at least one symbol is not configured by using RRC, and the terminal device detects that DCI indicates to perform CLI measurement on the first resource and that the at least one symbol is configured with no SFI. The one or more of the at least one symbol are flexible symbols, or the type of the at least one symbol is not configured. The flexible symbol or the symbol whose type is not configured may be used to receive a downlink signal, or may be used to send an uplink signal. If the terminal device is configured with no SFI, a direction of the at least one symbol is not changed by the SFI. Further, the DCI indicates the terminal device to perform CLI measurement, and the terminal device may consider that the at least one symbol is a downlink symbol. In this case, the terminal device can perform CLI measurement on the at least one symbol, a conflict on the at least one symbol is not caused.

Condition 7: One or more of the at least one symbol are configured as flexible symbols by using RRC, a symbol other than the flexible symbol in the at least one symbol is configured as a downlink symbol by using the RRC, the terminal device detects that DCI indicates to perform CLI measurement on the first resource, the at least one symbol is configured with an SFI, the terminal device fails to detect the SFI, and the terminal device detects that the SFI indicates that the at least one symbol is a flexible symbol or a downlink symbol. Alternatively, no type of the at least one symbol is configured by using RRC, the terminal device detects that DCI indicates to perform CLI measurement on the first resource, the at least one symbol is configured with an SFI, and the terminal device fails to detect the SFI, or the terminal device detects that the SFI indicates that the at least one symbol is a flexible symbol or a downlink symbol. Compared with the condition 6, if the at least one symbol is configured with the SFI, but the terminal device fails to detect the SFI, the DCI indicates the terminal device to perform CLI measurement, and the terminal device may consider that the at least one symbol is a downlink symbol. Alternatively, the terminal device detects that the SFI indicates that the at least one symbol is a flexible symbol or a downlink symbol, and perform CLI measurement based on the SFI indication and the DCI indication, and the terminal device may consider that the at least one symbol is a downlink symbol. The terminal device can perform CLI measurement on the at least one symbol, a conflict on the at least one symbol is not caused.

In this embodiment of this application, a trigger condition for performing CLI measurement or not performing CLI measurement by the terminal device is specified. For example, when the configured CLI resource conflicts with another resource, the terminal device cancels CLI measurement. For another example, when the SFI indicates a conflict with the configured CLI resource, the terminal device may also cancel CLI measurement. Because the terminal device cancels CLI measurement when a CLI resource conflict occurs, impact on sending data or receiving data by the terminal device can be avoided.

The procedures in FIG. 2 and FIG. 4 may be combined. To be specific, the CLI measurement methods provided in embodiments of this application include S201, S202, and S402. A sequence of performing S202 and 5402 is not limited. That is, S202 may be performed before S402, or may be performed after S402.

The foregoing embodiments provided in this application separately describe the method provided in embodiments of this application from a perspective of interaction between the terminal device and the network device. The steps performed by the network device may also be separately implemented by different communication apparatuses. For example, a first apparatus is configured to determine the first resource, and a second apparatus is configured to send the resource configuration information used to indicate the first resource. In other words, the first apparatus and the second apparatus jointly complete the steps performed by the network device in this embodiment of this application. A specific division manner is not limited in this application. When the network architecture includes one or more distributed units (distributed units, DUs), one or more central units (central units, CUs), and one or more radio frequency units (RUs), the steps performed by the network device may be separately implemented by the DU, the CU, and the RU. To implement the functions in the foregoing method provided in embodiments of this application, the terminal device and the network device each may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Based on a same invention concept as that of the method embodiments, an embodiment of this application provides a communication apparatus. The following describes, with reference to the accompanying drawings, a communication apparatus for implementing the foregoing method in embodiments of this application.

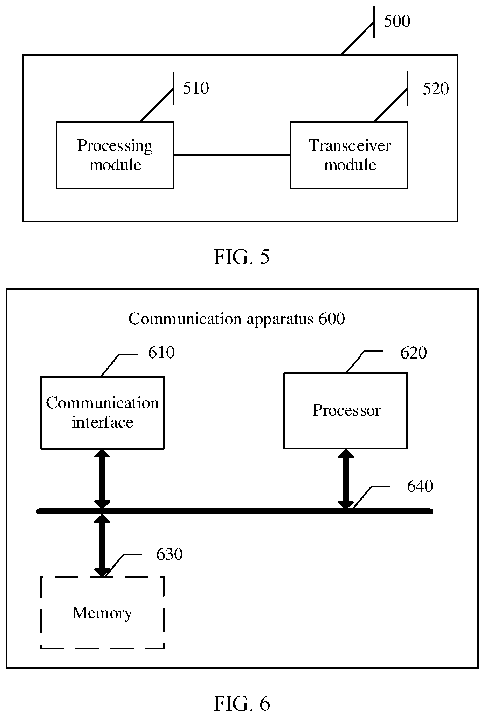

FIG. 5 is a schematic block diagram of a communication apparatus 500 according to an embodiment of this application. The communication apparatus 500 may include a processing module 510 and a transceiver module 520. Optionally, the communication apparatus 500 may further include a storage unit. The storage unit may be configured to store instructions (code or a program) and/or data. The processing module 510 and the transceiver module 520 may be coupled to the storage unit. For example, the processing unit 510 may read the instructions (the code or the program) and/or the data in the storage unit, to implement a corresponding method. The foregoing units may be independently disposed, or may be partially or completely integrated.

In some possible implementations, the communication apparatus 500 can correspondingly implement behavior and functions of the terminal device in the foregoing method embodiments, for example, implement the method performed by the terminal device in the embodiment in FIG. 2, or for another example, implement the method performed by the terminal device in the embodiment in FIG. 4. For example, the communication apparatus 500 may be a terminal device, a component (for example, a chip or a circuit) used in the terminal device, a chip or a chip set in the terminal device, or a part that is of a chip and that is configured to perform a related method function. The transceiver module 520 may be configured to perform all receiving or sending operations performed by the terminal device in the embodiment shown in FIG. 2, for example, S201 in the embodiment shown in FIG. 2, and/or configured to support another process of the technology described in this specification. The processing module 510 may be configured to perform all operations, other than the sending and receiving operations, performed by the terminal device in the embodiment shown in FIG. 2, for example, S202 in the embodiment shown in FIG. 2, and/or configured to support another process of the technology described in this specification; and/or, the transceiver module 520 may be configured to perform all receiving or sending operations performed by the terminal device in the embodiment shown in FIG. 4, for example, S401 in the embodiment shown in FIG. 4, and/or configured to support another process of the technology described in this specification. The processing module 510 may be configured to perform all operations, other than the sending and receiving operations, performed by the terminal device in the embodiment shown in FIG. 4, for example, S402 in the embodiment shown in FIG. 4, and/or configured to support another process of the technology described in this specification.

In a possible implementation, the transceiver module 520 is configured to receive resource configuration information from a network device, where the resource configuration information indicates a first resource, and the first resource is used by the communication apparatus 500 to perform CLI measurement. The processing module 510 is configured to: when a first specific condition is met, cancel CLI measurement on at least one symbol, where the at least one symbol includes a symbol in which the first resource is located.

In an optional implementation, the at least one symbol includes the symbol in which the first resource is located and NO symbols before the symbol in which the first resource is located, and NO is a positive integer.

In a possible implementation, the first specific condition includes: The at least one symbol partially or completely overlaps with a symbol in which a second resource is located, and the symbol in which the second resource is located is an uplink symbol.

In an optional implementation, the first specific condition includes: The at least one symbol partially or completely overlaps with a third resource, and the third resource includes a symbol corresponding to one or more valid PRACH occasions.

In an optional implementation, the first specific condition includes: The at least one symbol partially or completely overlaps with a third resource, and the third resource includes a symbol corresponding to one or more valid PRACH occasions and at least one of N_{gap} symbols before the symbol corresponding to the one or more valid PRACH occasions, where N_{gap} is an integer greater than or equal to 0.

In a possible implementation, the first specific condition includes: One or more of the at least one symbol indicated by DCI are used to send an uplink signal or receive a downlink signal.

In a possible implementation, the first specific condition includes: One or more of the at least one symbol are configured as flexible symbols by using RRC, or a type of the at least one symbol is not configured by using the RRC, the at least one symbol is configured with an SFI, the communication apparatus 500 fails to detect the SFI, and the communication apparatus 500 fails to detect that DCI indicates to perform CLI measurement on the first resource.

In a possible implementation, the first specific condition includes: One or more of the at least one symbol are configured as flexible symbols by using RRC, or a type of the at least one symbol is not configured by using the RRC, the communication apparatus 500 detects that an SFI indicates that the one or more of the at least one symbol are flexible symbols, and the communication apparatus 500 fails to detect that DCI indicates to perform CLI measurement on the first resource.

In an optional implementation, the communication apparatus is configured with a plurality of serving cells, the plurality of serving cells include a reference cell and another cell, the another cell is a serving cell other than the reference cell in the serving cells, and the first specific condition includes:
The first resource is configured by using RRC in the reference cell to perform CLI measurement, and one or more of the at least one symbol indicated by DCI in the another cell are used to send an uplink signal or receive a PDSCH. Alternatively, the first resource is configured in the another cell by using RRC to perform CLI measurement, and one or more of the at least one symbol are configured as uplink symbols in the reference cell by using the RRC. Alternatively, the first resource is configured in the another cell by using RRC to perform CLI measurement, and one or more of the at least one symbol are configured in the reference cell by using the RRC to send an uplink signal or receive a downlink signal.

In an optional implementation, the communication apparatus 500 meets the following features: The communication apparatus 500 supports a half-duplex mode, and the communication apparatus 500 is configured with a plurality of serving cells; the communication apparatus 500 does not support simultaneous sending and receiving in any serving cell; the communication apparatus 500 has a half-duplex capability of unpaired spectrum CA; and the communication apparatus 500 is configured with no SFI in any serving cell.

In an optional implementation, the first resource is configured in the serving cell by using the RRC to perform CLI measurement, the at least one symbol is configured as a downlink symbol by using the RRC in the reference cell, and is configured as an uplink symbol by using the RRC in the another cell.

In an optional implementation, the first resource is configured in the serving cell by using the RRC to perform CLI measurement, the at least one symbol is configured as an uplink symbol by using the RRC in the reference cell, and is configured as a downlink symbol by using the RRC in another cell.

In an optional implementation, frequency bands corresponding to the reference cell and the another cell are different.

In a possible implementation, the transceiver module 520 is configured to receive resource configuration information from a network device, where the resource configuration information indicates a first resource, and the first resource is used by the communication apparatus 500 to perform CLI measurement. The processing module 510 is configured to: when a second specific condition is met, perform CLI measurement on a symbol in which the first resource is located and NO symbols before the symbol in which the first resource is located, where NO is an integer greater than or equal to 1.

In an optional implementation, the second specific condition includes one or more of the following conditions:

The first resource is configured by using RRC to perform CLI measurement, and the at least one symbol is configured as a downlink symbol by using the RRC. Alternatively, the first resource is configured by using RRC to perform CLI measurement, one or more of the at least one symbol are configured as flexible symbols by using the RRC, a symbol other than the flexible symbol in the at least one symbol is configured as a downlink symbol by using the RRC, the communication apparatus 500 is configured with no SFI, and the communication apparatus 500 fails to detect that DCI indicates to send an uplink signal or receive a downlink signal on the one or more of the at least one symbol. Alternatively, the first resource is configured by using RRC to perform CLI measurement, a type of the at least one symbol is not configured by using the RRC, the communication apparatus 500 is configured with no SFI, and the communication apparatus 500 fails to detect that DCI indicates to send an uplink signal or receive a downlink signal on one or more of the at least one symbol. Alternatively, the first resource is configured by using RRC to perform CLI measurement, one or more of the at least one symbol are configured as flexible symbols by using the RRC, a symbol other than the flexible symbol in the at least one symbol is configured as a downlink symbol by using the RRC, and the communication apparatus 500 detects that an SFI indicates that the flexible symbol in the at least one symbol is a downlink symbol. Alternatively, the first resource is configured by using RRC to perform CLI measurement, a type of the at least one symbol is not configured by using the RRC, and the communication apparatus 500 detects that an SFI indicates that the at least one symbol is a downlink symbol. Alternatively, the at least one symbol is configured as a downlink symbol by using RRC, and the communication apparatus 500 detects that DCI indicates to perform CLI measurement on the first resource. Alternatively, one or more of the at least one symbol are configured as flexible symbols by using RRC, a symbol other than the flexible symbol in the at least one symbol is configured as a downlink symbol by using the RRC, and the communication apparatus 500 detects that DCI indicates to perform CLI measurement on the first resource and that the at least one symbol is configured with no SFI. Alternatively, a type of the at least one symbol is not configured by using RRC, and the communication apparatus 500 detects that DCI indicates to perform CLI measurement on the first resource and that the at least one symbol is configured with no SFI. Alternatively, one or more of the at least one symbol are configured as flexible symbols by using RRC, a symbol other than the flexible symbol in the at least one symbol is configured as a downlink symbol by using the RRC, the communication apparatus 500 detects that DCI indicates to perform CLI measurement on the first resource, the at least one symbol is configured with an SFI, the communication apparatus 500 fails to detect the SFI, and the communication apparatus 500 detects that the SFI indicates that the at least one symbol is a flexible symbol or a downlink symbol. Alternatively, no type of the at least one symbol is configured by using RRC, the communication apparatus 500 detects that DCI indicates to perform CLI measurement on the first resource, the at least one symbol is configured with an SFI, and the communication apparatus 500 fails to detect the SFI, or the communication apparatus 500 detects that the SFI indicates that the at least one symbol is a flexible symbol or a downlink symbol.

FIG. 6 shows a communication apparatus 600 according to an embodiment of this application. The communication apparatus 600 may be a terminal device, and can implement functions of the terminal device in the methods provided in embodiments of this application. The communication apparatus 600 may alternatively be an apparatus that can support the terminal device in implementing corresponding functions in the methods provided in embodiments of this application. The communication apparatus 600 may be a chip system. In this embodiment of this application, the chip system may include a chip, or may include a chip and another discrete device.

In terms of a hardware implementation, the transceiver module 520 may be a transceiver, and the transceiver is integrated into the communication apparatus 600 to form a communication interface 610.

The communication apparatus 600 includes at least one processor 620, configured to implement or support the communication apparatus 600 to implement the functions of the terminal device in the methods provided in embodiments of this application. For details, refer to detailed descriptions in the method examples. Details are not described herein again.

The communication apparatus 600 may further include at least one memory 630, configured to store program instructions and/or data. The memory 630 is coupled to the processor 620. The coupling in this embodiment of this application is an indirect coupling or a communication connection between apparatuses, units, or modules, may be in an electrical, a mechanical, or another form, and is used for information exchange between the apparatuses, the units, or the modules. The processor 620 may cooperate with the memory 630. The processor 620 may execute the program instructions and/or the data stored in the memory 630, to enable the communication apparatus 600 to implement a corresponding method. At least one of the at least one memory may be included in the processor. It should be noted that the memory 630 is not mandatory, and therefore is shown by using a dashed line in FIG. 6.

The communication apparatus 600 may further include the communication interface 610, configured to communicate with another device through a transmission medium, so that an apparatus used in the communication apparatus 600 may communicate with the another device. For example, when the communication apparatus is the terminal device, the another device is a network device. The processor 620 may send and receive data through the communication interface 610. The communication interface 610 may be specifically a transceiver.

A specific connection medium among the communication interface 610, the processor 620, and the memory 630 is not limited in this embodiment of this application. In this embodiment of this application, the memory 630, the processor 620, and the communication interface 610 are connected through a bus 640 in FIG. 6. The bus is represented by using a thick line in FIG. 6. A manner of a connection between other components is only an example for description, and imposes no limitation. The bus may be classified into an address bus, a data bus, a control bus, and the like. For ease of indication, only one thick line used to represent the bus in FIG. 6. However, it does not mean that there is only one bus or only one type of bus.

In embodiments of this application, the processor 620 may be a general-purpose processor, a digital signal processor, an application-specific integrated circuit, a field programmable gate array or another programmable logic device, a discrete gate or transistor logic device, or a discrete hardware assembly, and may implement or perform the methods, steps, and logical block diagrams disclosed in embodiments of this application. The general-purpose processor may be a microprocessor, or any conventional processor, or the like. The steps of the method disclosed with reference to embodiments of this application may be directly performed by a hardware processor, or may be performed by using a combination of hardware in the processor and a software module.

In this embodiment of this application, the memory 630 may be a nonvolatile memory, for example, a hard disk drive (hard disk drive, HDD) or a solid-state drive (solid-state drive, SSD), or may be a volatile memory (volatile memory) such as a random access memory (random access memory, RAM). The memory is any other medium that can carry or store expected program code in a form of instructions or a data structure and that can be accessed by a computer, but is not limited thereto. The memory in this embodiment of this application may alternatively be a circuit or any other apparatus that can implement a storage function, and is configured to store program instructions and/or data.

It should be noted that the communication apparatus in the foregoing embodiment may be a terminal device, may be a circuit, or may be a chip used in the terminal device, or another combined device, component, or the like that has the functions of the terminal device. When the communication apparatus is the terminal device, the transceiver module may be a transceiver and may include an antenna, a radio frequency circuit, and the like, and the processing module may be a processor, for example, a central processing module (central processing unit, CPU). When the communication apparatus is the component having the functions of the terminal, the transceiver module may be a radio frequency unit, and the processing module may be a processor. When the communication apparatus is the chip system, the transceiver module may be an input/output interface of the chip system, and the processing module may be a processor of the chip system.

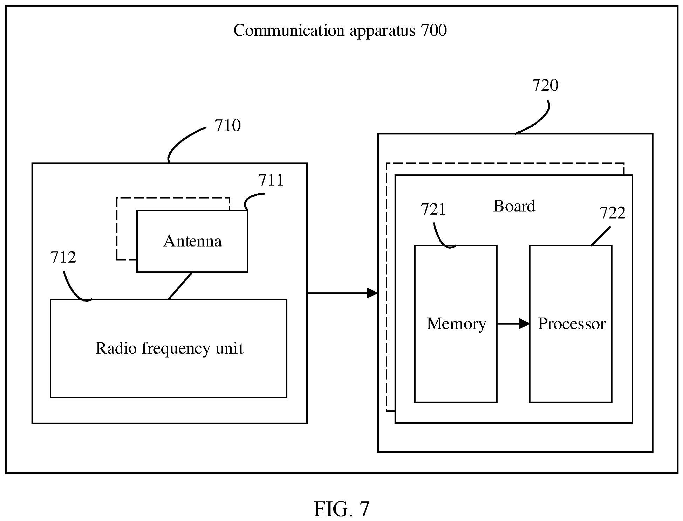

FIG. 7 is a schematic diagram of a simplified structure of a communication apparatus. For ease of understanding and illustration, in FIG. 7, for example, the communication apparatus is a base station. The base station may be used in the system shown in FIG. 1, may be the network device in FIG. 1, and performs functions of the network device in the method embodiments.

The communication apparatus 700 may include a transceiver 710, a memory 721, and a processor 722. The transceiver 710 may be used by the communication apparatus for communication, for example, configured to send or receive the first indication information or the capability information. The memory 721 is coupled to the processor 722, and may be configured to store a program and data that are necessary for implementing functions by the communication apparatus 700. The processor 722 is configured to support the communication apparatus 700 in performing the corresponding functions in the foregoing method. The functions may be implemented by invoking the program stored in the memory 721.

Specifically, the transceiver 710 may be a wireless transceiver, and may be configured to support the communication apparatus 700 in receiving and sending signaling and/or data through a wireless air interface. The transceiver 710 may also be referred to as a transceiver unit or a communication unit. The transceiver 710 may include one or more radio frequency units 712 and one or more antennas 711. The radio frequency unit, for example, a remote radio unit (remote radio unit, RRU) or an active antenna unit (active antenna unit, AAU), may be specifically configured to transmit a radio frequency signal and perform conversion between a radio frequency signal and a baseband signal. The one or more antennas may be specifically configured to radiate and receive a radio frequency signal. Optionally, the transceiver 710 may include only the radio frequency unit. In this case, the communication apparatus 700 may include the transceiver 710, the memory 721, the processor 722, and the antenna 711.

The memory 721 and the processor 722 may be integrated together or may be independent of each other. As shown in FIG. 7, the memory 721 and the processor 722 may be integrated into a control unit 720 of the communication apparatus 700. For example, the control unit 720 may include a baseband unit (baseband unit, BBU) of an LTE base station, and the baseband unit may also be referred to as a digital unit (digital unit, DU). Alternatively, the control unit 710 may include a distributed unit (distributed unit, DU) and/or a central unit (central unit, CU) in a base station in 5G and a future radio access technology. The control unit 720 may include one or more antenna panels. A plurality of antenna panels may jointly support a radio access network (for example, an LTE network) of a single access standard, or a plurality of antenna panels may separately support radio access networks (for example, an LTE network, a 5G network, and another network) of different access standards. The memory 721 and the processor 722 may serve one or more antenna panels. In other words, the memory 721 and the processor 722 may be separately disposed on each antenna panel. Alternatively, the plurality of antenna panels may share a same memory 721 and a same processor 722. In addition, a necessary circuit may be disposed on each antenna panel. For example, the circuit may be configured to implement coupling between the memory 721 and the processor 722. The transceiver 710, the processor 722, and the memory 721 may be connected to each other through a bus (bus) structure and/or another connection medium.

Based on the structure shown in FIG. 7, when the communication apparatus 700 needs to send data, the processor 722 may perform baseband processing on the to-be-sent data, and output a baseband signal to the radio frequency unit. After performing radio frequency processing on the baseband signal, the radio frequency unit sends a radio frequency signal in a form of an electromagnetic wave through the antenna. When data is sent to the communication apparatus 700, the radio frequency unit receives the radio frequency signal through the antenna, converts the radio frequency signal into a baseband signal, and outputs the baseband signal to the processor 722. The processor 722 converts the baseband signal into data, and processes the data.

Based on the structure shown in FIG. 7, the transceiver 710 may be configured to perform the foregoing steps performed by the transceiver module 520, and/or the processor 722 may be configured to invoke instructions in the memory 721, to perform the steps performed by the processing module 510.

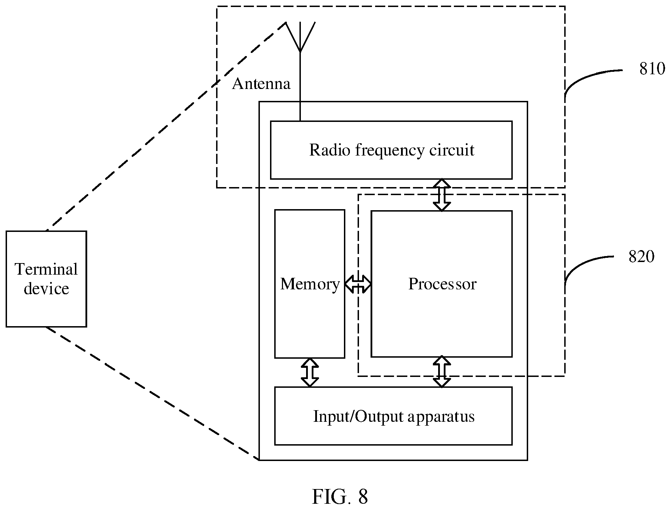

FIG. 8 is a schematic diagram of a simplified structure of a terminal device. For ease of understanding and illustration, an example in which the terminal device is a mobile phone is used in FIG. 8. As shown in FIG. 8, the terminal device includes a processor, a memory, a radio frequency circuit, an antenna, and an input/output apparatus. The processor is mainly configured to: process a communication protocol and communication data, control an on-board unit, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the device, the radio frequency circuit receives the radio frequency signal through the antenna, converts the radio frequency signal into a baseband signal, and outputs the baseband signal to the processor. The processor converts the baseband signal into data, and processes the data. For ease of description, only one memory and one processor are shown in FIG. 8. In an actual device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the apparatus, and the processor having a processing function may be considered as a processing unit of the apparatus. As shown in FIG. 8, the apparatus includes a transceiver unit 810 and a processing unit 820. The transceiver unit 810 may also be referred to as a transceiver, a transceiver machine, a transceiver apparatus, or the like. The processing unit 820 may also be referred to as a processor, a processing board, a processing module, a processing apparatus, or the like. Optionally, a device that is in the transceiver unit 810 and that is configured to implement a receiving function may be considered as a receiving unit, and a device that is in the transceiver unit 810 and that is configured to implement a sending function may be considered as a sending unit. That is, the transceiver unit 810 includes the receiving unit and the sending unit. The transceiver unit 810 sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 810 is configured to perform a sending operation and a receiving operation on a terminal device side in the foregoing method embodiments, and the processing unit 820 is configured to perform an operation other than the sending operation and the receiving operation of the terminal device in the foregoing method embodiments. For example, in an implementation, the transceiver unit 810 may be configured to perform 5201 in the embodiment shown in FIG. 2, and/or configured to support another process of the technology described in this specification. The processing unit 820 may be configured to perform 5202 in the embodiment shown in FIG. 2, and/or configured to support another process of the technology described in this specification. For another example, in an implementation, the transceiver unit 810 may be configured to perform S401 in the embodiment shown in FIG. 4, and/or configured to support another process of the technology described in this specification. The processing unit 820 may be configured to perform S402 in the embodiment shown in FIG. 4, and/or configured to support another process of the technology described in this specification.

When the communication apparatus is a chip apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes a network device and a terminal device, or may include more network devices and more terminal devices. For example, the communication system includes a network device and a terminal device that are configured to implement related functions in FIG. 2 or FIG. 4.

The network device is separately configured to implement functions related to the network parts in FIG. 2 or FIG. 4. The terminal device is configured to implement functions related to the terminal device in FIG. 2 or FIG. 4. For details, refer to the related descriptions in the method embodiments. Details are not described herein again.

An embodiment of this application further provides a computer-readable storage medium including instructions. When the instructions are run on a computer, the computer is enabled to perform the method performed by the network device in FIG. 2 or FIG. 4; or when the instructions are run on a computer, the computer is enabled to perform the method performed by the terminal device in FIG. 2 or FIG. 4.

An embodiment of this application further provides a computer program product including instructions. When the instructions are run on a computer, the computer is enabled to perform the method performed by the network device in FIG. 2 or FIG. 4; or when the instructions are run on a computer, the computer is enabled to perform the method performed by the terminal device in FIG. 2 or FIG. 4.

An embodiment of this application provides a chip system. The chip system includes a processor and may further include a memory, to implement the functions of the network device or the terminal in the foregoing method, or implement the functions of the network device and the terminal in the foregoing method. The chip system may include a chip, or may include a chip and another discrete device.

It should be understood that the terms "system" and "network" may be used interchangeably in embodiments of this application. "At least one" means one or more, and "a plurality of' means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of obj ects. For example, a first specific condition and a second specific condition are only used to distinguish different specific conditions, but do not indicate different priorities, importance, or the like of the two specific conditions.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is only an example. For example, division into the units is only logical function division and may be other division in actual implementation. For example, a plurality of units or assemblies may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, comprising:
receiving resource configuration information from a network device, wherein the resource configuration information indicates a first resource, and the first resource is used by a terminal device to measure CLI; and
when a first specific condition is met, canceling CLI measurement on at least one symbol, wherein the at least one symbol comprises a symbol in which the first resource is located.

2. The method according to claim 1, wherein the at least one symbol comprises the symbol in which the first resource is located and NO symbols before the symbol in which the first resource is located, and NO is a positive integer.

3. The method according to claim 1 or 2, wherein the first specific condition comprises:
the at least one symbol partially or completely overlaps with a symbol in which a second resource is located, and the symbol in which the second resource is located is an uplink symbol.

4. The method according to claim 3, wherein the symbol in which the second resource is located is configured as the uplink symbol by using radio resource control RRC, or the symbol in which the second resource is located is indicated as the uplink symbol by a slot format indicator SFI.

5. The method according to claim 1 or 2, wherein the first specific condition comprises:
the at least one symbol partially or completely overlaps with a third resource, and the third resource comprises a symbol corresponding to one or more valid physical random access channel PRACH occasions; or
the at least one symbol partially or completely overlaps with a third resource, and the third resource comprises a symbol corresponding to one or more valid PRACH occasions and at least one of N_{gap} symbols before the symbol corresponding to the one or more valid PRACH occasions, wherein N_{gap} is a positive integer.

6. The method according to claim 1 or 2, wherein the first specific condition comprises:
one or more of the at least one symbol indicated by downlink control information DCI are used to send an uplink signal or receive a downlink signal.

7. The method according to claim 1 or 2, wherein the first specific condition comprises:
one or more of the at least one symbol are configured as flexible symbols by using RRC, or a type of the at least one symbol is not configured by using the RRC, the at least one symbol is configured with an SFI, the terminal device fails to detect the SFI, or the terminal device detects the SFI that indicates that the one or more of the at least one symbol are the flexible symbols, and the terminal device fails to detect that DCI indicates to perform CLI measurement on the first resource.

8. The method according to claim 1 or 2, wherein the terminal device is configured with a plurality of serving cells, the plurality of serving cells comprise a reference cell and another cell, the another cell is a serving cell other than the reference cell in the serving cells, and the first specific condition comprises:
the first resource is configured by using radio resource control RRC in the reference cell to perform CLI measurement, and one or more of the at least one symbol indicated by DCI in the another cell are used to send an uplink signal or receive a downlink signal;
the first resource is configured in the another cell by using radio resource control RRC to perform CLI measurement, and one or more of the at least one symbol are configured as uplink symbols in the reference cell by using the RRC; or
the first resource is configured in the another cell by using radio resource control RRC to perform CLI measurement, and one or more of the at least one symbol are configured in the reference cell by using the radio resource control RRC to send an uplink signal or receive a downlink signal.

9. The method according to claim 8, wherein the first resource is configured in the serving cell by using the RRC to perform CLI measurement; and
the at least one symbol is configured as a downlink symbol by using the RRC in the reference cell, and is configured as the uplink symbol by using the RRC in the another cell; or
the at least one symbol is configured as the uplink symbol by using the RRC in the reference cell, and is configured as a downlink symbol by using the RRC in the another cell.

10. The method according to claim 8 or 9, wherein the reference cell and the another cell have different frequency bands.

11. A cross-link interference CLI measurement method, wherein the method comprises:
receiving resource configuration information from a network device, wherein the resource configuration information indicates a first resource, and the first resource is used by a terminal device to perform CLI measurement; and
when a second specific condition is met, performing CLI measurement on at least one symbol, wherein the at least one symbol comprises a symbol in which the first resource is located and NO symbols before the symbol in which the first resource is located, and NO is a positive integer.

12. The method according to claim 11, wherein the second specific condition comprises:
the first resource is configured by using radio resource control RRC to perform CLI measurement, and the at least one symbol is configured as a downlink symbol by using the RRC;
the first resource is configured by using radio resource control RRC to perform CLI measurement, one or more of the at least one symbol are configured as flexible symbols by using the RRC, a symbol other than the flexible symbol in the at least one symbol is configured as a downlink symbol by using the RRC, the terminal device is configured with no SFI, and the terminal device fails to detect that DCI indicates to send an uplink signal or receive a downlink signal on the one or more of the at least one symbol;
the first resource is configured by using radio resource control RRC to perform CLI measurement, a type of the at least one symbol is not configured by using the RRC, the terminal device is configured with no SFI, and the terminal device fails to detect that DCI indicates to send an uplink signal or receive a downlink signal on one or more of the at least one symbol;
the first resource is configured by using radio resource control RRC to perform CLI measurement, one or more of the at least one symbol are configured as flexible symbols by using the RRC, a symbol other than the flexible symbol in the at least one symbol is configured as a downlink symbol by using the RRC, and the terminal device detects that a slot format indicator SFI indicates that the flexible symbol in the at least one symbol is a downlink symbol;
the first resource is configured by using radio resource control RRC to perform CLI measurement, a type of the at least one symbol is not configured by using the RRC, and the terminal device detects that a slot format indicator SFI indicates that the at least one symbol is a downlink symbol;
the at least one symbol is configured as a downlink symbol by using RRC, and the terminal device detects that DCI indicates to perform CLI measurement on the first resource;
one or more of the at least one symbol are configured as flexible symbols by using RRC, a symbol other than the flexible symbol in the at least one symbol is configured as a downlink symbol by using the RRC, and the terminal device detects that DCI indicates to perform CLI measurement on the first resource and that the at least one symbol is configured with no SFI;
a type of the at least one symbol is not configured by using RRC, and the terminal device detects that DCI indicates to perform CLI measurement on the first resource and that the at least one symbol is configured with no SFI;
one or more of the at least one symbol are configured as flexible symbols by using RRC, a symbol other than the flexible symbol in the at least one symbol is configured as a downlink symbol by using the RRC, the terminal device detects that DCI indicates to perform CLI measurement on the first resource, the at least one symbol is configured with an SFI, the terminal device fails to detect the SFI, and the terminal device detects that the SFI indicates that the at least one symbol is a flexible symbol or a downlink symbol; or
no type of the at least one symbol is configured by using RRC, the terminal device detects that DCI indicates to perform CLI measurement on the first resource, the at least one symbol is configured with an SFI, and the terminal device fails to detect the SFI, or the terminal device detects that the SFI indicates that the at least one symbol is a flexible symbol or a downlink symbol.

13. A communication apparatus, comprising a processing module and a transceiver module, wherein
the transceiver module is configured to receive resource configuration information from a network device, wherein the resource configuration information indicates a first resource, and the first resource is used by a terminal device to perform CLI measurement; and
the processing module is configured to: when a first specific condition is met, cancel CLI measurement on at least one symbol, wherein the at least one symbol comprises a symbol in which the first resource is located.

14. The communication apparatus according to claim 13, wherein the at least one symbol comprises the symbol in which the first resource is located and NO symbols before the symbol in which the first resource is located, and NO is a positive integer.

15. The communication apparatus according to claim 13 or 14, wherein the first specific condition comprises:
the at least one symbol partially or completely overlaps with a symbol in which a second resource is located, and the symbol in which the second resource is located is an uplink symbol.

16. The communication apparatus according to claim 15, wherein the symbol in which the second resource is located is configured as the uplink symbol by using radio resource control RRC, or the symbol in which the second resource is located is indicated as the uplink symbol by using a slot format indicator SFI.

17. The communication apparatus according to claim 13 or 14, wherein the first specific condition comprises:
the at least one symbol partially or completely overlaps with a third resource, and the third resource comprises a symbol corresponding to one or more valid physical random access channel PRACH occasions; or
the at least one symbol partially or completely overlaps with a third resource, and the third resource comprises a symbol corresponding to one or more valid PRACH occasions and at least one of N_{gap} symbols before the symbol corresponding to the one or more valid PRACH occasions, wherein N_{gap} is a positive integer.

18. The communication apparatus according to claim 13 or 14, wherein the first specific condition comprises:
one or more of the at least one symbol indicated by downlink control information DCI are used to send an uplink signal or receive a downlink signal.

19. The communication apparatus according to claim 13 or 14, wherein the first specific condition comprises:
one or more of the at least one symbol are configured as flexible symbols by using RRC, or a type of the at least one symbol is not configured by using the RRC, the at least one symbol is configured with an SFI, the terminal device fails to detect the SFI, and the terminal device fail to detect that DCI indicates to perform CLI measurement on the first resource; or
one or more of the at least one symbol are configured as flexible symbols by using RRC, or a type of the at least one symbol is not configured by using the RRC, the terminal device detects that an SFI indicates that the one or more of the at least one symbol are flexible symbols, and the terminal device fails to detect that DCI indicates to perform CLI measurement on the first resource.

20. The communication apparatus according to claim 13 or 14, wherein the terminal device is configured with a plurality of serving cells, the plurality of serving cells comprise a reference cell and another cell, the another cell is a serving cell other than the reference cell in the serving cells, and the first specific condition comprises:
the first resource is configured by using radio resource control RRC in the reference cell to perform CLI measurement, and one or more of the at least one symbol indicated by DCI in the another cell are used to send an uplink signal or receive a downlink signal;
the first resource is configured in the another cell by using radio resource control RRC to perform CLI measurement, and one or more of the at least one symbol are configured as uplink symbols in the reference cell by using the RRC; or
the first resource is configured in the another cell by using radio resource control RRC to perform CLI measurement, and one or more of the at least one symbol are configured in the reference cell by using the radio resource control RRC to send an uplink signal or receive a downlink signal.

21. The communication apparatus according to claim 20, wherein the first resource is configured in the serving cell by using the RRC to perform CLI measurement; and
the at least one symbol is configured as a downlink symbol by using the RRC in the reference cell, and is configured as an uplink symbol by using the RRC in the another cell; or
the at least one symbol is configured as the uplink symbol by using the RRC in the reference cell, and is configured as a downlink symbol by using the RRC in the another cell.

22. The communication apparatus according to claim 20 or 21, wherein the reference cell and the another cell have different frequency bands.

23. A communication apparatus, comprising a transceiver module and a processing module, wherein
the transceiver module is configured to receive resource configuration information from a network device, wherein the resource configuration information indicates a first resource, and the first resource is used by a terminal device to perform CLI measurement; and
the processing module is configured to: when a second specific condition is met, perform CLI measurement on at least one symbol.

24. The communication apparatus according to claim 23, wherein the second specific condition comprises:
the first resource is configured by using radio resource control RRC to perform CLI measurement, and the at least one symbol is configured as a downlink symbol by using the RRC;
the first resource is configured by using radio resource control RRC to perform CLI measurement, one or more of the at least one symbol are configured as flexible symbols by using the RRC, a symbol other than the flexible symbol in the at least one symbol is configured as a downlink symbol by using the RRC, the terminal device is configured with no SFI, and the terminal device fails to detect that DCI indicates to send an uplink signal or receive a downlink signal on the one or more of the at least one symbol;
the first resource is configured by using radio resource control RRC to perform CLI measurement, a type of the at least one symbol is not configured by using the RRC, the communication apparatus is configured with no SFI, and the communication apparatus fails to detect that DCI indicates to send an uplink signal or receive a downlink signal on one or more of the at least one symbol;
the first resource is configured by using radio resource control RRC to perform CLI measurement, one or more of the at least one symbol are configured as flexible symbols by using the RRC, a symbol other than the flexible symbol in the at least one symbol is configured as a downlink symbol by using the RRC, and the communication apparatus detects that a slot format indicator SFI indicates that the flexible symbol in the at least one symbol is a downlink symbol;
the first resource is configured by using radio resource control RRC to perform CLI measurement, a type of the at least one symbol is not configured by using the RRC, and the communication apparatus detects that a slot format indicator SFI indicates that the at least one symbol is a downlink symbol;
the at least one symbol is configured as a downlink symbol by using RRC, and the communication apparatus detects that DCI indicates to perform CLI measurement on the first resource;
one or more of the at least one symbol are configured as flexible symbols by using RRC, a symbol other than the flexible symbol in the at least one symbol is configured as a downlink symbol by using the RRC, and the communication apparatus detects that DCI indicates to perform CLI measurement on the first resource and that the at least one symbol is configured with no SFI;
a type of the at least one symbol is not configured by using RRC, and the communication apparatus detects that DCI indicates to perform CLI measurement on the first resource and that the at least one symbol is configured with no SFI;
one or more of the at least one symbol are configured as flexible symbols by using RRC, a symbol other than the flexible symbol in the at least one symbol is configured as a downlink symbol by using the RRC, the communication apparatus detects that DCI indicates to perform CLI measurement on the first resource, the at least one symbol is configured with an SFI, the communication apparatus fails to detect the SFI, and the communication apparatus detects that the SFI indicates that the at least one symbol is a flexible symbol or a downlink symbol; or
no type of the at least one symbol is configured by using RRC, the communication apparatus detects that DCI indicates to perform CLI measurement on the first resource, the at least one symbol is configured with an SFI, the communication apparatus fails to detect the SFI, or the communication apparatus detects that the SFI indicates that the at least one symbol is a flexible symbol or a downlink symbol.

25. A communication apparatus, comprising a processor and a communication interface, wherein the communication interface is configured to: receive a signal from a communication apparatus other than the communication apparatus, and transmit the signal to the processor or send a signal from the processor to another communication apparatus other than the communication apparatus; and the processor is configured to implement the method according to any one of claims 1 to 10 or claims 11 and 12 by using a logic circuit or by executing code instructions.

26. A computer-readable storage medium, wherein the computer-readable storage medium stores a computer program, and when the computer program is run, the method according to any one of claims 1 to 10 or claims 11 and 12 is implemented.

27. A computer-readable storage medium, wherein the computer program product comprises computer program code, and when the computer program code is run, the method according to any one of claims 1 to 10 or claims 11 and 12 is implemented.
